(19) Europäisches Patentamt / European Patent Office / Office européen des brevets

(11) **EP 4 198 085 A1**

(12) **EUROPEAN PATENT APPLICATION**
published in accordance with Art. 153(4) EPC

(43) Date of publication:
21.06.2023 Bulletin 2023/25

(21) Application number: 21855965.6

(22) Date of filing: 10.08.2021

(51) International Patent Classification (IPC):
$C08L\ 33/04^{(2006.01)}$    $B29C\ 45/00^{(2006.01)}$
$C08K\ 3/014^{(2018.01)}$    $C08L\ 25/14^{(2006.01)}$
$C08L\ 83/04^{(2006.01)}$    $G02B\ 5/02^{(2006.01)}$

(52) Cooperative Patent Classification (CPC):
B29C 45/00; C08K 3/014; C08L 23/14;
C08L 25/14; C08L 33/04; C08L 33/12; C08L 83/04;
G02B 5/02

(86) International application number:
PCT/JP2021/029568

(87) International publication number:
WO 2022/034886 (17.02.2022 Gazette 2022/07)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 14.08.2020 JP 2020137106

(71) Applicant: Asahi Kasei Kabushiki Kaisha
Tokyo 1000006 (JP)

(72) Inventor: TSUJIMOTO Katsura
Tokyo 100-0006 (JP)

(74) Representative: D Young & Co LLP
120 Holborn
London EC1N 2DY (GB)

(54) **METHACRYLIC RESIN COMPOSITION AND MOLDED BODY**

(57) The present disclosure is directed to providing a methacrylic resin composition and a molded article having excellent performances to allow light to be favorably transmitted and sufficiently diffused, and having good heat deformation resistance and long-term use property. A methacrylic resin composition includes 0.5 to 6 parts by mass of a light diffusing filler having an average particle diameter of 0.2 to 10 μm and 0.005 to 0.3 parts by mass of an ultraviolet absorber with respect to 100 parts by mass of a methacrylic resin, and has an intermediate point glass transition temperature of 105 °C or higher.

EP 4 198 085 A1

**Description**

TECHNICAL FIELD

The present disclosure relates to a methacrylic resin composition and a molded article.

BACKGROUND

Conventionally, usage of a light diffusing member obtained by molding a material in which inorganic or organic fine particles are dispersed in a transparent resin as a base resin, as a light diffusing member used in an illumination cover, various types of displays, signboards, or the like has been studied. In such a light diffusing member, a technique is widely used in which light rays are scattered or reflected at the interface between a base resin and fine particles by means of the refractive index difference between the base resin having transparency and the fine particles dispersed in the base resin so as to give light diffusion properties. As the transparent resin in this case, methacrylic resins, polycarbonate-based resins, styrene-based resins, cyclic olefin-based resins and the like are usually used.

In products such as the light cover, various types of displays, signboards, and the like, the light diffusing material used in these products is required to have a performance to allow light to be further transmitted and sufficiently diffused. In addition, in recent years, usage of LEDs as light sources lengthens the lifetime as compared with the lifetime of conventional products, and are thus required to be suitable for use in a longer period of time and long-term use in outdoors. Further, in recent years, the outputs of internal light sources are increased for obtaining a light emitter that is brighter and has excellent visibility from a distance, and a light diffusing material having good heat deformation resistance is highly demanded.

PTL 1 discloses a methacrylic resin composition obtained by adding a crosslinked silicone resin to a methacrylic resin. Although the composition disclosed in PTL 1 achieves a good light transmission and good light diffusion property, it is not suitable for long-term use. In addition, the productivity of the methacrylic resin composition is low, the heat deformation resistance is not sufficient, and a good molded article cannot be obtained when the methacrylic resin composition is used as a member for a vehicle.

PTL 2 discloses fine particles suitable for achieving good light transmission and good light diffusion property. However, the heat deformation resistance of the fine particles is insufficient in use thereof, and additionally they are not suitable for long-term use.

CITATION LIST

Patent Literature

PTL 1: JP H3-207743 A
PTL 2: JP H10-67829 A

SUMMARY

(Technical Problem)

On the other hand, in applications such as an emblem for a vehicle, a shift lever, an in-vehicle lamp cover, and a lamp cover disposed inside a combination lamp, the ambient temperature in use is relatively high. Thus, a method is employed in which transmitted light is diffused by using a transparent resin having good heat deformation resistance and embossing the surface of the molded article of the transparent resin. However, in a large-sized molded article or a molded article having a long molding flow length, embosses on the surface cannot be provided successfully, and an internal light source may be visually seen through it, so that the shape of the molded article may be limited. Further, in the embossing molding, particularly when injection molding is continued for a long period of time, there is a problem in terms of maintenance of the quality because protrusions and recesses on the surface of the mold become flattened, so that an internal light source may become visually seen. There is a strong demand for a light diffusing material having good heat deformation resistance capable of solving these problems and excellent long-term use property that can be used in vehicles, such as automobiles, which are used for a long period of time.

Therefore, an object of the present disclosure is to provide a methacrylic resin composition and a molded article having excellent performances to allow light to be favorably transmitted and sufficiently diffused, and having good heat deformation resistance and long-term use property.

(Solution to Problem)

As a result of intensive studies to solve the above-described problem of the prior art, the present inventor has found that the above-described problem of prior art can be solved by a methacrylic resin composition having a certain composition, and has completed the present disclosure.

Thus, the present disclosure provides the following.

[1] A methacrylic resin composition comprising 0.5 to 6 parts by mass of a light diffusing filler having an average particle diameter of 0.2 to 10 $\mu$m and 0.005 to 0.3 parts by mass of an ultraviolet absorber with respect to 100 parts by mass of a methacrylic resin, and having an intermediate point glass transition temperature of 105 °C or higher.

[2] The methacrylic resin composition according to [1], wherein the light diffusing filler is an organic particle.

[3] The methacrylic resin composition according to [1] or [2], wherein the light diffusing filler is a crosslinked styrene-MMA resin or a crosslinked silicone resin.

[4] The methacrylic resin composition according to any one of [1] to [3], wherein the average particle diameter of the light diffusing filler is 1.2 to 9 $\mu$m.

[5] The methacrylic resin composition according to any one of [1] to [4], wherein a weight average molecular weight of the methacrylic resin is 75,000 to 230,000.

[6] The methacrylic resin composition according to any one of [1] to [5], wherein the methacrylic resin is a methacrylic resin containing 6 to 50% of a molecular weight component of one fifth or less of a peak molecular weight (Mp) on a GPC elution curve measured by gel permeation chromatography (GPC).

[7] The methacrylic resin composition according to any one of [1] to [6], wherein an amount of unsaturated double bond end of the methacrylic resin is 0.013 mol% or less.

[8] The method according to any one of [1] to [7], wherein the ultraviolet absorber is an ultraviolet absorber having a maximum absorption wavelength at a wavelength of 300 nm or more and 350 nm or less in a wavelength range from 300 nm to 830 nm.

[9] The methacrylic resin composition according to any one of [1] to [8], wherein any of the following I) to iii) is satisfied:

i) a viscosity at a shear rate of 100 (1/second) at 260 °C is 1000 Pa·s or more and 1500 Pa·s or less, and the intermediate point glass transition temperature is 111 °C or higher and 130 °C or lower,

ii) the viscosity at a shear rate of 100 (1/second) at 260 °C is 500 Pa·s or more and less than 1000 Pa·s, and the intermediate point glass transition temperature is 113 °C or higher and 130 °C or lower,

iii) the viscosity at a shear rate of 100 (1/second) at 260 °C is 200 Pa·s or more and less than 500 Pa·s, and the intermediate point glass transition temperature is 115 °C or higher and 130 °C or lower.

[10] The methacrylic resin composition according to any one of [1] to [9], wherein the methacrylic resin comprises a monomer unit derived from a methacrylic acid ester and a monomer unit derived from a monomer that does not contain an aromatic ring copolymerizable with a methacrylic acid ester.

[11] The methacrylic resin according to [1] to [10], further comprising an additive, wherein a synthesis mass ratio of the additive excluding a rubber component to 100 parts by mass of the methacrylic resin is 0.15 parts by mass or less.

[12] The methacrylic resin composition according to any one of [1] to [11], wherein a residual monomer is in an amount of 8000 mass ppm or less.

[13] The methacrylic resin composition according to any one of [1] to [12], wherein the methacrylic resin composition does not comprise a yellowish dye.

[14] A molded article produced by molding the methacrylic resin composition according to any one of [1] to [13].

[15] The molded article according to [14], wherein the molded article has a thickness t of 1 to 5 mm.

[16] The molded article according to [14] or [15], wherein the molding is injection molding.

[17] The molded article according to [14], wherein a length L and the thickness t satisfy the following conditions (1), (2), and (3):

$$1 \text{ mm} \leq t \leq 5 \text{ mm} \qquad \qquad \text{Condition (1)}$$

$$L \geq 130 \text{ mm} \qquad \qquad \text{Condition (2)}$$

$$L/t \geq 65 \qquad \qquad \text{Condition (2)}$$

[18] The molded article according to any one of [14] to [17] used as a member for a vehicle.

[19] The molded article according to any one of [14] to [17] used as a member for a vehicle lamp.

[20] The molded article according to any one of [14] to [17] used as a lamp cover disposed inside a combination lamp for a vehicle.

(Advantageous Effect)

According to the present disclosure, it is possible to obtain a methacrylic resin composition and a molded article having excellent performances to allow light to be favorably transmitted and sufficiently diffused, and having good heat deformation resistance and long-term use property.

DETAILED DESCRIPTION

The following provides a detailed description of an embodiment of the present disclosure (hereinafter, referred to as "present embodiment").

In the following description, constitutional units forming a polymer are referred to as "... monomer unit" and/or "... structural unit" including a plurality of such "... monomer units".

Moreover, a constituent material of a "... monomer unit" may be referred to simply as a "... monomer", by omitting the term "unit".

[Methacrylic resin composition]

A methacrylic resin composition of the present embodiment contains 0.5 to 6 parts by mass of a light diffusing filler having an average particle diameter of 0.2 to 10 $\mu$m and 0.005 to 0.3 parts by mass of an ultraviolet absorber with respect to 100 parts by mass of a methacrylic resin, and has an intermediate point glass transition temperature of 105 °C or higher. Among them, by having an intermediate point glass transition temperature of 105 °C or higher and by not containing a yellowish dye, it is possible to impart better heat deformation resistance when molded into a molded article, and the composition can be more suitably used in applications, such as applications used in a close proximity to an internal light source such as a high-power LED.

<Methacrylic resin>

The methacrylic resin is one of the constituent components of the methacrylic resin composition of the present embodiment. By including the methacrylic resin, a hood appearance is achieved, and good heat deformation resistance and long-term use property are both achieved.

The methacrylic resin is preferably a homopolymer of methyl methacrylate or a copolymer containing a repeating unit derived from methyl methacrylate for achieving good fluidity, transparency, yellowness, and heat deformation resistance. In particular, from the viewpoint of ensuring an excellent long-term use property, a copolymer containing a monomer unit derived from a methacrylic acid ester (e.g., methyl methacrylate) and a monomer unit derived from a monomer that does not contain an aromatic ring copolymerizable with a methacrylic acid ester (e.g., a monomer that does not contain an aromatic ring among other monomers described later) is preferred, and a copolymer containing only a monomer unit derived from a monomer unit derived from a methacrylic acid ester (e.g., methyl methacrylate) and a monomer that does not contain an aromatic ring copolymerizable with a methacrylic acid ester (e.g., a monomer that does not contain an aromatic ring among other monomers described later) is more preferred.

The copolymer is preferably a copolymer in which the mass ratio of a repeating monomer unit derived from methyl methacrylate is 75 mass% or more with respect to 100 mass% of the methacrylic resin. The copolymer is more preferably a copolymer containing 75 mass% or more and less than 100 mass% of a methyl methacrylate monomer unit and more than 0 mass% and 25 mass% or less of a repeating monomer unit derived from the other monomer, even more preferably a copolymer containing 80 mass% or more and less than 100 mass% of a methyl methacrylate monomer unit and more than 0 mass% and 20 mass% or less of a repeating monomer unit derived from the other monomer, and particularly preferably a copolymer containing 90 mass% or more and less than 99.5 mass% of a methyl methacrylate monomer unit and more than 0.5 mass% and 10 mass% or less of a repeating monomer unit derived from the other monomer, with respect to 100 mass% of the methacrylic resin.

The other monomer is preferably a monomer copolymerizable with methacrylic acid ester (preferably methyl methacrylate).

Examples of the other monomer included in the methacrylic resin and constituting the repeating monomer unit derived from the other monomers include, but are not limited to, acrylic acid ester monomers having one acrylate group such as methyl acrylate, ethyl acrylate, n-propyl acrylate, n-butyl acrylate, sec-butyl acrylate, 2-ethylhexyl acrylate, and lauryl acrylate (preferably, an acrylic acid ester monomer which does not contain an aromatic ring and has one acrylate group). Methyl acrylate, ethyl acrylate, and butyl acrylate are preferred because they are readily available. From the viewpoint of long-term use property, it is preferable to use a monomer not containing an aromatic ring.

In the case where an acrylic acid ester monomer having one acrylate group (for example, an acrylic acid ester monomer which does not contain an aromatic ring and has one acrylate group) is used, the mass ratio of the repeating unit derived from an acrylic acid ester monomer having one acrylate group is preferably 0.1 mass% or more, more preferably 0.3 mass% or more, even more preferably 0.5 mass% or more, and even more preferably 1 mass% or more with respect to 100 mass% of the methacrylic resin for achieving a good fluidity. The amount of a repeating unit derived from an acrylic acid ester monomer having one acrylate group is 8 mass% or less, more preferably 5 mass% or less, and even more preferably 4 mass% or less with respect to 100 mass% of the methacrylic resin for achieving a good heat deformation resistance. In particular, in the case where a methyl acrylate monomer is used as the other monomer, the repeating monomer unit derived from methyl acrylate is preferably contained in the amount of 1.5 to 3.8 mass% with respect to 100 mass% of the methacrylic resin; in the case where an ethyl acrylate monomer is used, the repeating monomer unit derived from ethyl acrylate is preferably contained in the amount of 5 to 7 mass% with respect to 100 mass% of the methacrylic resin.

Examples of the other monomer also include an acrylic acid ester monomer having two or more (meth) acrylate groups, including one in which ethylene glycol or hydroxyl groups at both ends of the oligomer have been esterified with acrylic acid or methacrylic acid such as ethylene glycol di (meth) acrylate, diethylene glycol di (meth) acrylate, triethylene glycol di (meth) acrylate, and tetraethylene glycol di (meth) acrylate; one in which hydroxyl groups of two alcohols have been esterified with acrylic acid or methacrylic acid such as neopentyl glycol di (meth) acrylate and di (meth) acrylate; and one in which a polyhydric alcohol derivative has been esterified with acrylic acid or methacrylic acid such as trimethylolpropane and pentaerythritol. Among them, acrylic acid ester monomers that do not contain an aromatic ring are preferable from the viewpoint of long-term use property.

It is preferable that, the case where a monomer having two (meth)acrylate groups are used, the amount of the repeating monomer unit derived from the monomer having two (meth)acrylate groups is preferably 0.4 mass% or less; in the case where a monomer having three (meth)acrylate groups is used, the amount is 0.25 mass% or less; and the amount is 0.15 mass% or less in the case where a monomer having four or more (meth)acrylate groups is used, with respect to 100 mass% of the methacrylic resin, from the viewpoint of ensuring fluidity during injection molding and maintaining transparency.

Examples of the monomer other than an acrylic acid ester monomer, include but are not limited to α, β-unsaturated acids such as acrylic acid and methacrylic acid; unsaturated group-containing divalent carboxylic acids such as maleic acid and fumaric acid, itaconic acid and cinnamic acid and their alkyl esters; styrene-based monomers such as styrene, o-methylstyrene, m-methylstyrene, p-methylstyrene, 2,4-dimethylstyrene, 2,5-dimethylstyrene, 3,4-dimethylstyrene, 3,5-dimethylstyrene, p-ethylstyrene, m-ethylstyrene, o-ethylstyrene, p-tert-butylstyrene, and isopropenylbenzene (a-methylstyrene); aromatic vinyl compounds such as 1-vinylnaphthalene, 2-vinylnaphthalene, 1,1-diphenylethylene, isopropenyltoluene, isopropenylethylbenzene, isopropenylpropylbenzene, isopropenylbutylbenzene, isopropenylpentylbenzene, isopropenylhexylbenzene, and isopropenyloctylbenzene; cyanizedvinyl compounds such as acrylonitrile and methacrylonitrile; unsaturated carboxylic acid anhydrides such as maleic anhydride and itaconic anhydride; maleimide and N-substituted maleimides such as N-methylmaleimide, N-ethylmaleimide, N-phenylmaleimide, and N-cyclohexylmaleimide; amides such as acrylamide andmethacrylamide; and polyfunctional monomers such as divinylbenzene. Among them, from the viewpoint of the heat deformation resistance, N-substituted maleimides are preferable, and from the viewpoint of the long-term use property, it is preferable to use a monomer that does not contain an aromatic ring.

The content of the other vinyl monomer unit copolymerizable with the above-described methacrylic acid ester monomer constituting the methacrylic resin is preferably 0.1 mass% or more and 20 mass% in the methacrylic resin.

When the mass ratio of the repeating monomer unit derived from the other vinyl monomer copolymerizable with methyl methacrylate is 0.1 mass% or more with respect to 100 mass% of the methacrylic resin, the fluidity and the heat resistance can be improved, and when the mass ratio is 20 mass% or less, the heat resistance can be enhanced. It is preferably 0.1 to 17 mass%, more preferably 0.2 to 15 mass%, and even more preferably 0.3 to 12 mass%.

The other monomers may be used alone or in combination of two or more.

(Properties of methacrylic resin)

- Weight average molecular weight and molecular weight distribution -

The weight average molecular weight and the molecular weight distribution of the methacrylic resin will be described.

The methacrylic resin preferably has a weight average molecular weight (Mw) measured by gel permeation chromatography (GPC) of 300000 or less. For achieving excellent mechanical strength and solvent resistance, the weight average molecular weight (Mw) of the methacrylic resin is preferably 50000 or more, more preferably 60000 or more, even more preferably 70000 or more, still even more preferably 75000 or more, and particularly preferably 80000 or more. Further, for imparting a good fluidity to the methacrylic resin, the weight average molecular weight (Mw) is preferably 300000 or less, more preferably 250000 or less, even more preferably 230000 or less, further more preferably 210000 or less, and even further more preferably 180000 or less. In particular, when the weight average molecular weight is 110000 to 175000, an excellent balance of the molding fluidity, the diffusivity, the long-term use property, and the impact resistance is achieved. When molded, it is further preferable that a molded article can be molded satisfactorily even into a size used in applications of a members for an automobile.

When the weight average molecular weight of the methacrylic resin is within the range described above, the fluidity, the mechanical strength, and the solvent resistance can be well balanced, and good moldability can be maintained. In particular, when Mw is 75000 or more, a further excellent strength is achieved. Further, when it is 18500 or less, a further excellent molding fluidity is achieved.

The molecular weight distribution (Mw/Mn) of the methacrylic resin is preferably 1.7 to 6.0, more preferably 1.8 to 5.0, even more preferably 1.9 to 5.0, and still even more preferably 2.0 to 5.0. When the molecular weight distribution of the methacrylic resin is 1.6 or more and 6.0 or less, the effect of achieving an excellent balance between the molding process flow and the mechanical strength can be obtained. In particular, when the molecular weight distribution is 3.0 to 5.0, a further excellent balance of the molding fluidity, the diffusivity, the long-term use property, and the impact resistance is achieved.

The weight average molecular weight (Mw) and the number average molecular weight (Mn) of the methacrylic resin can be measured by gel permeation chromatography (GPC), and specifically, it can be measured by the method described in the Examples to be described later.

Specifically, standard methacrylic resin which has known monodisperse weight average molecular weights and is available as a reagent, and an analytical gel column through which higher molecular weight components are eluted earlier are used to obtain a calibration curve from the elution time and the weight average molecular weights. Then, the weight average molecular weight (Mw) and the number average molecular weight (Mn) of the methacrylic resin to be measured can be determined based on the obtained calibration curve, and the molecular weight distribution can be calculated from these.

The number average molecular weight (Mn) is a average molecular weight for one simple molecule, and it is defined by the total weight of the system/the number of molecules in the system.

The weight average molecular weight (Mw) is defined as an average molecular weight by weight fraction.

- Presence amount of molecular weight components of one fifth or less of peak top molecular weight (Mp) -

For achieving good moldability and impact resistance, the presence amount of molecular weight components of one fifth or less of the peak top molecular weight (Mp) present in the methacrylic resin is preferably 5% to 50%, more preferably 6% to 50%, even more preferably 7% to 45%, still even more preferably 8% to 43%, and particularly preferably 10% to 30%. In particular, when the presence amount of molecular weight components of one fifth or less of the peak top molecular weight (Mp) is 20 to 30%, an excellent balance of the moldability, the diffusivity, the long-term use property, and the impact resistance is achieved.

Here, the presence amount (%) of molecular weight components of one fifth or less of the peak top molecular weight (Mp) is the ratio of the area of the total area corresponding to molecular weight components of one fifth or less of the peak top molecular weight (Mp) when the area of the total area of a GPC elution curve is taken to be 100%, and can be measured by the method described in Examples to be described later.

Note that the peak top molecular weight (Mp) refers to the weight molecular weight at the peak in a GPC elution curve.

When a plurality of peaks are present in a GPC elution curve, the weight molecular weight at the peak having the largest presence amount is defined as the peak top molecular weight (Mp).

When the presence amount of molecular weight components of one fifth or less of the peak top molecular weight (Mp) present in the methacrylic resin is 6% or more, the light diffusing filler is effectively prevented from containing the gases in a mold during a molding flow and causing a burst and molding failure, so that a good formability can be obtained. In addition, a good molding fluidity is also obtained. When it is 50% or less, a good impact resistance is obtained.

Further, the amount of methacrylic resin components having a molecular weight of 500 or less is preferably as small as possible for preventing occurrence of a foam-like appearance defects called silver during molding.

- Intermediate point glass transition temperature measured using differential scanning calorimeter -

The methacrylic resin preferably has an intermediate point glass transition temperature (°C) of 105 °C or higher obtained from a glass transition curve obtained by using α-alumina as a reference and raising the temperature from 40 °C to 210 °C at a temperature increase rate of 10 °C/min in accordance with JIS K-7121 using a differential scanning calorimeter (DSC) in a nitrogen gas atmosphere.

A higher value of the intermediate point glass transition temperature (°C) obtained by the measurement method described in Examples to be described later indicates a higher heat deformation resistance as a resin, which affects the temperature at which deformation starts when a light source is brought into a close proximity to a molded article. Therefore, the higher the intermediate point glass transition temperature is, the closer a high-output light source can be brought in proximity. In addition, a molded article can be stably used in a desired shape even in an application in which a high-power LED light source is used in a close proximity to the molded article. The methacrylic resin preferably has an intermediate point glass transition temperature of 107 °C or higher, more preferably 109 °C or higher, even more preferably 111 °C or higher, further more preferably 113 °C or higher, and even further preferably 118 °C or higher. Further, it is preferably 140 °C or lower for achieving a good balance between the strength and the fluidity of the methacrylic resin.

- Amount of unsaturated double bond end -

The amount of unsaturated double bond end of the methacrylic resin is preferably 0.015 mol% or less with respect to 100 mol% of the methacrylic resin for preventing occurrence of molding defects called silver streaks due to generation of a pyrolysis gas. It is more preferably 0.013 mol% or less and even more preferably 0.009 mol% or less. The amount of unsaturated double bond end can be controlled by controlling the polymerization temperature or using a chain transfer agent.

The amount of unsaturated double bond end can be measured with the method described in the Examples to be described later.

(Production method of methacrylic resin)

The methacrylic resin can be produced by the solution polymerization method, the bulk polymerization method, the cast polymerization method, or the suspension polymerization method, but these methods are not limitative. The bulk polymerization, solution polymerization, and suspension polymerization methods are preferred, and the suspension polymerization method is more preferred. By selecting suspension polymerization, a spherical polymer having a size of 0.5 μm to 5 mm can be obtained, and the dispersion of an additive can be improved in production of the methacrylic resin composition of the present embodiment.

The polymerization temperature may be appropriately selected depending on the polymerization method. In the case where suspension polymerization is performed, the polymerization temperature is preferably 50 °C or higher and 100 °C or lower, and more preferably 60 °C or higher and 90 °C or lower. In the case where solution polymerization is performed, the temperature is preferably 180 °C or lower, and more preferably 160 °C or lower.

When producing the methacrylic resin, a polymerization initiator may be used.

Examples of the polymerization initiator include but are not limited to, when performing radical polymerization, organic peroxides such as di-t-butyl peroxide, lauroyl peroxide, stearyl peroxide, benzoyl peroxide, t-butyl peroxyneodecanate, t-butylperoxypivalate, dilauroyl peroxide, dicumyl peroxide, t-butylperoxy-2-ethylhexanoate, 1,1-bis (t-butylperoxy)-3,3,5-trimethylcyclohexane, and 1,1-bis (t-butylperoxy) cyclohexane, and azo-based general radical polymerization initiators such as azobisisobutyronitrile, azobisisovaleronitrile, 1,1-azobis (1-cyclohexanecarbonitrile), 2,2'-azobis-4-methoxy-2,4-azobisisobutyronitrile, 2,2'-azobis-2,4-dimethylvaleronitrile, and 2,2'-azobis-2-methylbutyronitrile. These may be used alone or in combination of two or more. It is also acceptable to use a combination of these radical polymerization initiators and an appropriate reducing agent as a redox-based initiator.

These radical polymerization initiators and/or redox-based initiators are generally used in a range of 0 to 1 part by mass with respect to 100 parts by mass of the total amount of all the monomers used in the polymerization of the methacrylic resin. The amount can be appropriately selected in consideration of the temperature at which the polymerization is performed and the half-life of the polymerization initiator.

When the bulk polymerization method, the cast polymerization method, or the suspension polymerization method is selected as the polymerization method of the methacrylic resin, it is preferable to perform the polymerization using a peroxide-based polymerization initiator from the viewpoint of preventing the coloring of the methacrylic resin.

Examples of the peroxide-based polymerization initiator include but are not limited to lauroyl peroxide, decanoyl peroxide, and t-butylperoxy-2-ethylhexanoate, in which lauroyl peroxide is more preferable.

When the methacrylic resin is polymerized with a solution polymerization method at high temperatures of 90 °C or higher, it is preferable to use, for example, a peroxide or azobis initiator that has a 10-hour half-life temperature of 80 °C or higher and is soluble in an organic solvent used as the polymerization initiator.

Examples of the peroxide or azobis initiator include but are not limited to 1,1-bis (t-butylperoxy)-3,3,5-trimethylcyclohexane, cyclohexaneperoxide, 2,5-dimethyl-2,5-di (benzoylperoxy) hexane, 1,1-azobis (1-cyclohexanecarbonitrile), and 2-(carbamoylazo) isobutyronitrile.

When producing the methacrylic resin, the molecular weight of the methacrylic resin may be controlled to the extent that the effects of the present disclosure are not impaired. Examples of a method of controlling the molecular weight of the methacrylic resin include but are not limited to methods of controlling the molecular weight by using a chain transfer agent such as alkyl mercaptans, dimethylacetamide, dimethylformamide, and triethylamine, and an iniferter such as dithiocarbamates, triphenylmethylazobenzene, and tetraphenylethane derivatives. It is also possible to adjust the molecular weight by adjusting the amount of these additions.

From the viewpoint of handleability and stability, it is preferable to use alkyl mercaptans as the chain transfer agent. Examples of the alkyl mercaptans include but are not limited to n-butyl mercaptan, n-octyl mercaptan, n-dodecyl mercaptan, t-dodecyl mercaptan, n-tetradecyl mercaptan, n-octadecyl mercaptan, 2-ethylhexyl thioglycolate, ethylene glycol dithioglycolate, trimethylolpropane tris (thioglycolate), and pentaerythritol tetrakis (thioglycolate).

The chain transfer agent and iniferter described above can be appropriately added depending on the target molecular weight of the methacrylic resin, but they are generally used in a range of 0.001 parts by mass to 5 parts by mass with respect to 100 parts by mass of the total amount of all the monomers used in the polymerization of the methacrylic resin.

Examples of other molecular weight controlling methods include a method of changing the polymerization method, a method of adjusting the amount of the chain transfer agent and iniferter described above, and a method of changing various polymerization conditions such as the polymerization temperature.

These molecular weight controlling methods may be used alone or in combination of two or more.

<Light diffusing filler>

The light diffusing filler is one of the constituent components of the methacrylic resin composition of the present embodiment. By containing 0.5 to 6 parts by mass of a light diffusing filler having an average particle diameter of 0.2 to 10 $\mu$m with respect to 100 parts by mass of the methacrylic resin described above, it is possible to maintain brightness with clear visibility while effectively reducing a light source image in a product having a light source therein, particularly in a member for a vehicle.

As the light diffusing filler, inorganic particles such as titanium dioxide, aluminum trioxide, zinc oxide, and barium sulfate, and organic particles such as a crosslinked silicone resin, a crosslinked methacrylic resin, a crosslinked styrene-methyl methacrylate-based resin, and a crosslinked styrene resin are preferable. Among them, organic particles are more preferable for increasing the amount of transmitted light and improving the brightness and the visibility when light is incident on a molded article, and a crosslinked silicone resin and a crosslinked styrene-methyl methacrylate-based resin are more preferable for further improving the light diffusion property and the balance between the brightness and the visibility when light is incident on the molded article and the long-term use property, and it is even more preferable to use a porous body for further improving the light diffusion property.

The methacrylic resin refers to a resin having a degree of crosslinking (%) of 0.5 or less, and the organic particles in the light diffusing filler refer to a resin having a degree of crosslinking of 2 or more. A degree of crosslinking refers to the degree of crosslinking measured by adding 29 g of N,N-dimethylformamide and 1 g of a sample to a glass container, shaking them for 24 hours to form a swelling liquid, evaporating the gel portion obtained after removing the supernatant liquid by centrifugation to dryness in a vacuum dryer at 130 °C, measuring the weight of the residue, and making a measurement in the same manner as in ASTM D6725.

The average particle diameter of the light diffusing filler is more preferably 1.2 $\mu$m or more and 9 $\mu$m or less, even more preferably 1.7 $\mu$m or more and 8 $\mu$m or less, and still even more preferably 2 $\mu$m or more and 6 $\mu$m or less.

The average particle diameter can be measured as follows. In 100 ml of acetone, 2 g of a sample of the methacrylic resin composition cut out from a molded article is dissolved. The insoluble matter is precipitated by centrifugation and dried, and the resultant is dispersed in 3 mL of a 0.1-mass% water solution of sodium hexametaphosphate to prepare a dispersion. The dispersion is dropped into Beckman Coulter LS 13320 while gentle shaking to such an extent that no air bubble is generated. The reading of the densitometer is adjusted to an appropriate range, and the cumulative 50% particle diameter on volume basis is calculated.

The content of the light diffusing filler is more preferably 1 part by mass or more and 5 parts by mass or less with respect to 100 parts by mass of the methacrylic resin.

In the case where organic fine particles are used as the light diffusing filler, when organic fine particles having a refractive index larger than that of the base resin are used, the refractive index difference between the methacrylic resin and the light diffusing filler is preferably 0.06 or less, more preferably 0.05 or less, and even more preferably 0.04 or less for obtaining a methacrylic resin composition having good weather resistance. For achieving a good light diffusion property, the refractive index difference is preferably 0.005 or more, more preferably 0.01 or more, and even more preferably 0.02 or more. In the case where organic fine particles having a refractive index smaller than that of the base resin is used, the refractive index difference between the methacrylic resin and the light diffusing filler is preferably 0.1 or less, more preferably 0.08 or less for achieving good weather resistance and total light transmittance and providing a molded article that is bright and has a good visibility when light of a light source is incident. For achieving a good light diffusion property, the refractive index difference is preferably 0.005 or more, more preferably 0.01 or more, and even more preferably 0.02 or more.

In the case where inorganic fine particles are used as the light diffusing filler, the refractive index difference between the methacrylic resin and the light diffusing filler is preferably 1.5 or less and more preferably 1.1 or less for achieving a good total light transmittance and providing a molded article that is bright and has a good visibility when light of a light source is incident.

The refractive index difference is a value obtained assuming that the refractive index of polymethyl methacrylate exceeding the limit molecular weight is 1.491, and one having a refractive index difference from the refractive index of polymethyl methacrylate is 0.003 or more is referred to.


(Ultraviolet absorber)

The methacrylic resin composition of the present embodiment contains 0.005 to 0.3 parts by mass of an ultraviolet absorber with respect to 100 parts by mass of the methacrylic resin. By containing the ultraviolet absorber, it is possible not only to achieve good weather resistance and long-term use property and to obtain a molded article suitable for long-term use when molded, it is also possible to effectively prevent discoloration when exposed to light having a wavelength in the ultraviolet range included in a light source and reduction in the amount of transmitted light due to the absorption of LED light caused by the discoloration. In the methacrylic resin composition containing the light diffusing filler of the present embodiment, the optical path length of light transmitted through a molded article is larger than the thickness of the molded article due to the diffusion of the light, so that discoloration is further emphasized. Accordingly, prevention of discoloration is quite important. The ultraviolet absorber may be an absorber that directly absorbs light in the ultraviolet range, or may be an absorber that prevents a reaction that causes degradation of the resin due to ultraviolet rays, so that the energy of ultraviolet rays may be absorbed in some form.

For making the performance of the ultraviolet absorber to be sufficiently exhibited, the ultraviolet absorber needs to be contained in an amount of 0.005 parts by mass or more, and is contained in an amount of preferably 0.01 parts by mass or more, more preferably 0.015 parts by mass or more, and even more preferably 0.02 parts by mass or more, with respect to 100 parts by mass of the methacrylic resin. Further, for prevention of contamination of the mold and sticking of the resin to a metal roll by precipitation of the ultraviolet absorber during molding, the ultraviolet absorber needs to be contained in an amount of 0.3 parts by mass or less, and is contained in an amount of preferably 0.19 parts by mass or less, more preferably 0.15 parts by mass or less, even more preferably 0.1 parts by mass or less, still even more preferably 0.07 parts by mass or less, particularly preferably 0.04 parts by mass or less, with respect to 100 parts by mass of the methacrylic resin, .

Examples of ultraviolet absorbers that can be used include, but are not limited to, benzotriazole compounds, benzotriazine compounds, benzoate compounds, benzophenone compounds, oxybenzophenone compounds, hindered amine compounds, phenol compounds, oxazole compounds, malonic acid ester compounds, cyanoacrylate compounds, lactone compounds, salicylic acid ester compounds, and benzoxazinone compounds, of which benzotriazole compounds, benzotriazine compounds, or hindered amine compounds are preferred.

The above-described ultraviolet absorbers may be used alone or in combination of two or more.

In the methacrylic resin composition of the present embodiment including the light diffusing filler, it is preferable that the ultraviolet absorber is one that has a maximum absorption wavelength of 300 nm or more and 350 nm or less in the range of wavelength of 300 nm to 830 nm or does not have a maximum absorption wavelength in the visible light range at wavelengths of 380 to 780 nm, and it is more preferable that the ultraviolet absorber is one that has a maximum absorption wavelength of 300 nm or more and 350 nm or less in the range of wavelength of 300 nm to 830 nm because the optical path length of light transmitted through a molded article is larger than the thickness of the molded article due to diffusion of light, so that the color tone is emphasized. When the ultraviolet absorber is one that has a maximum absorption wavelength of 350 nm or less or does not have a maximum absorption wavelength in the visible light range, light of a white LED of a light source can be allowed to diffuse in the color further closer to white, for example, when the light source is used as a member for an automobile, and thus an excellent nighttime visibility is achieved.

The vapor pressure (P) of the ultraviolet absorber at 20 °C is preferably $1.0 \times 10^{-4}$ Pa or less, more preferably $1.0 \times 10^{-6}$ Pa or less, and even more preferably $1.0 \times 10^{-8}$ Pa or less from the viewpoint of the molding processability.

Having an excellent molding processability indicates, for example, that adhesion of the ultraviolet absorber to a surface of a mold is less likely to occur during injection molding, or that adhesion of the ultraviolet absorber to a roll is less likely to occur during film molding.

When adhesion to a roll occurs, for example, there is a possibility of adhesion to a surface of a molded article and deterioration in the appearance and the optical properties, which is not preferable when the molded article is used as an optical material.

The melting point (Tm) of the ultraviolet absorber is preferably 80 °C or higher, more preferably 100 °C or higher, and even more preferably 130 °C or higher. When the melting point is 80 °C or higher, volatilization of the ultraviolet absorber during molding can be suppressed and the performances can be made to be sufficiently exhibited. In addition, it is possible to effectively prevent contamination of a mold caused by the volatilized ultraviolet absorber.

When the ultraviolet absorber is heated from 23 °C to 260 °C at a rate of 20 °C/min, the weight loss rate of the ultraviolet absorber is preferably 50% or less, more preferably 30% or less, even more preferably 15% or less, further preferably 10% or less, and even further preferably 5% or less.

<Other additive>

The methacrylic resin composition of the present embodiment may contain an additive(s) other than the methacrylic resin, the light diffusing filler, and the ultraviolet absorber to the extent that the object of the present disclosure is not impaired. As the other additives, a thermal stabilizer, a strength modifier, and the like are preferably added. It is preferable not to use a rubber component as the other additives. In the present specification, occasionally, the other additive(s) is simply referred to as "additive(s)".

(Heat stabilizer)

Examples of the thermal stabilizer include, but are not limited to, antioxidants such as hindered phenol antioxidants and phosphorus processing stabilizers, and hindered phenol antioxidants are preferable.

Specifically, examples thereof include pentaerythritol tetrakis[3-(3,5-di-tert-butyl-4-hydroxyphenyl)propionate, thiodiethylenebis [3-(3,5-di-tert-butyl-4-hydroxyphenyl)propionate, octadecyl-3-(3,5-di-tert-butyl-4-hydroxyphenyl)propionate, N,N'-hexane-1,6-diylbis [3-(3,5-di-tert-butyl-4-hydroxyphenylpropionamide, 3,3',3",5,5',5"-hexa-tert-butyl-a,a',a"-(mesitylene-2,4,6-triyl)tri-p-cresol, 4,6-bis(octylthiomethyl)-cresol, 4,6-bis(dodecylthiomethyl)-cresol, ethylene bis(oxyethylene) bis[3-(5-tert-butyl-4-hydroxy-m-tolyl)propionate, hexamethylene bis[3-(3,5-di-tert-butyl-4-hydroxyphenyl)propionate, 1,3,5-tris (3,5-di-tert-butyl-4-hydroxybenzyl) -1,3,5-triazine-2,4,6(1H,3H,5H)-trione, and 2,6-di-tert-butyl-4-(4,6-bis(octylthio)-1,3,5-triazine-2-ylamine)phenol; and pentaerythritol terakis [3-(3,5-di-tert-butyl-4-hydroxyphenyl)propionate is exemplified as a preferred thermal stabilizer.

When a thermal stabilizer is used, the amount is preferably 0.03 mass% or more, more preferably 0.05 mass% or more, and even more preferably 0.1 mass% or more, with respect to 100 parts by mass of the methacrylic resin, for making the effect thereof to be sufficiently exhibited. Further, for preventing contamination of a mold such as mold deposit, the amount of the thermal stabilizer added is preferably 0.5 mass% or less, more preferably 0.2 mass parts or less, even more preferably 0.15 mass% or less, and particularly preferably 0.12 mass parts or less.

(Other resin)

The other resin used as the other additives is not particularly limited as long as the effect of the present disclosure is not impaired, and a known thermoplastic resin is preferably used.

Examples of the thermoplastic resin include but are not limited to, a polypropylene-based resin, a polyethylene-based resin, a polystyrene-based resin, a syndiotactic polystyrene resin, an ABS-based resin (acrylonitrile-butadiene-styrene-based copolymer), an AS-based resin (acrylonitrile-styrene-based copolymer), a BAAS-based resin (butadiene-acrylonitrile-acrylonitrile rubber-styrene-based copolymer), an AAS-based resin (acrylonitrile-acrylonitrile rubber-styrene-based copolymer), a thermoplastic polyurethane resin, a biodegradable resin, alloys of polycarbonate-ABS resin, polyalkylene arylate-based resins such as polybutylene terephthalate, polyethylene terephthalate, polypropylene terephthalate, polytrimethylene terephthalate, a polyethylene naphthalate, a polyamide-based resin, a polyphenylene ether-based resin, a polyphenylene sulfide-based resin, and a phenolic resin.

In particular, an AS resin, a BAAS resin, and a thermoplastic polyurethane resin are preferable because they improve the fluidity, an ABS resin and a thermoplastic polyurethane resin are preferable because they improve the impact resistance, and a polyester resin is preferable because it improves the chemical resistance.

A polyphenylene ether-based resin, a polyphenylene sulfide-based resin, a phenolic resin and the like are expected to have an effect of improving the flame retardance.

These resins may be used alone or in combination of two or more.

In the case where the other resin is used, the content is preferably more than 0 mass% and 40 mass% or less, more preferably 30 mass% or less, and even more preferably 20% or less by mass with respect to 100 mass% of the methacrylic resin composition for maintaining good total light transmittance and weather resistance.

Examples of the other additives include, but are not limited to, plasticizers such as phthalate ester-based, fatty acid ester-based, trimellitate ester-based, phosphate ester-based, and polyester-based ones; lubricants such as higher fatty acid, higher fatty acid ester, and higher fatty acid mono, di, or triglyceride-based ones; antistatic agents such as polyether-based, polyether ester-based, polyether ester amide-based ones, alkyl sulphonate, and alkylbenzene sulphonate; a flame retardant aid; a conductivity imparting agent, a stress relaxation agent, a crystallization accelerator, a hydrolysis inhibitor, a lubricating agent, a strength modifier, a slidability modifier, a compatibilizer, a nucleating agent, a strengthening agent, a reinforcing agent, a flow modifier, a sensitizer, a thickener, a settling prevention agent, a anti-sagging agent, a filler, a defoamer, a coupling agent, a rust inhibitor, an antibacterial and antifungal agent, an anti-fouling agent, a conductive polymer, and dye pigment.

In the methacrylic resin composition of the present embodiment, when a lubricant is used, the content of the above-mentioned other additives with respect to 100 parts by mass of the methacrylic resin composition is preferably 0.03 parts by mass or more and more preferably 0.05 parts by mass or more, for achieving a hood release property . For prevention of molding defects such as bleed-out, it is preferably 0.5 parts by mass or less, more preferably 0.3 parts by mass or less, even more preferably 0.2 parts by mass or less, particularly preferably 0.12 parts by mass or less. When a dye pigment is used, an organic dye is preferable for achieving a good total light transmittance. Further, for achieving a good weather resistance, anthraquinone-based, perinone-based, methine-based, and quinophthalone-based organic dyes are more preferable. By using the dye, not only a light diffusing molded article in a desired color can be obtained, but also the color tone of diffused light can be adjusted. The amount of the dye added is preferably 0.000002 parts by mass or more and more preferably 0.000005 parts by mass or more, for obtaining a dyeing effect. For prevention of contamination of a mold, it is preferably 0.6 parts by mass or less, more preferably 0.3 parts by mass or less, even more preferably 0.2 parts by mass or less, and particularly preferably 0.12 parts by mass or less.

The methacrylic resin composition of the present embodiment preferably does not contain a yellowish dye. A yellowish dye refers to a dye having a maximum absorption wavelength in wavelengths of 380 to 495 nm. When no yellowish dye is included, light having wavelengths of 420 to 430 nm that is contained in white LED light with a high intensity is made to be diffused satisfactorily. On the other hand, if a yellowish dye is contained, light in wavelengths of 420 to 430 nm is absorbed, so that heat is accumulated in the material and the temperature of the resin is raised. For this reason, usage in a sufficient close proximity to an LED light source and increase in the output of the LED light source for achieving good visibility even from a distant place are difficult. In addition, because the methacrylic resin composition becomes yellowish, the visibility of a white LED at night reduces. In addition, degradation of the resin and bleed-out of an additive are promoted.

When the strength modifier is used, for effective modification of the strength, the content is preferably 1 part by mass or more, more preferably 2 parts by mass or more, and even more preferably 5 parts by mass or more with respect to 100 parts by mass of the methacrylic resin. For ensuring good heat deformation resistance and fluidity, the content is preferably 35 parts by mass or less, more preferably 20 parts by mass or less, and even more preferably 15 parts by mass or less.

For suppressing bleed-out of an additive and stabilizing the light transmission and diffusion properties even when used in space where the temperature and the humidity are increased, as in the inside of a lamp housing of an automobile, the total mass ratio of the additives excluding a rubber component is preferably 0.15 parts by mass or less, more preferably 0.14 parts by mass or less, and even more preferably 0.13 parts or less by mass with respect to 100 parts by mass of the methacrylic resin.

When the above-mentioned other additives are contained in the above-mentioned numerical ranges, the respective functions of the materials can be made to be exhibited.

<Method of producing methacrylic resin composition>

The methacrylic resin composition of the present embodiment can be produced, for example, by mixing the methacrylic resin, the light diffusing filler, and the ultraviolet absorber.

The mixing method is not particularly limited, but the melt-kneading method, the solvent-kneading method, the dry-blending method, or the like is used, and the melt-kneading method and the dry-blending method are preferable from the viewpoint of productivity.

The apparatus used for mixing may be a conventional kneader or mixer, and examples thereof specifically include a single screw extruder, a twin screw extruder, a Henschel mixer, a Banbury mixer, and a tumbler.

A twin screw extruder is preferably used in the method of melt-kneading because it can uniformly disperse the light diffusing agent without incurring aggregation and good light diffusion property and improved uniformity of the light diffusion property of an obtained resin molded article can be achieved.

In the case of melt-kneading, the production temperature is preferably 200 °C or higher and 320 °C or lower. From the viewpoint of productivity, the temperature is more preferably 210 °C or higher and even more preferably 220 °C or higher, and from the viewpoint of preventing yellowing of the methacrylic resin composition due to decomposition of the resin, the temperature is more preferably 300 °C or lower and even more preferably 290 °C or lower.

<Properties of methacrylic resin molded article>

The methacrylic resin composition of the present embodiment has an intermediate point glass transition temperature (Tg) of 105 °C or higher.

A higher value of the intermediate point glass transition temperature (°C) indicates a higher heat deformation resistance as a resin, which affects the temperature at which deformation starts when a light source is brought into a close proximity to a molded article. Therefore, the higher the intermediate point glass transition temperature is, the closer the high-output light source can be brought in proximity. In addition, the molded article can be stably used in a desired shape even in an application in which a high-power LED light source is used in a close proximity to the molded article.

The intermediate point glass transition temperature is preferably 107 °C or higher, more preferably 109 °C or higher, even more preferably 111 °C or higher, further preferably 113 °C or higher, even further preferably 115 °C or higher, and particularly preferably 118 °C or higher. Further, for achieving a good physical property balance between the strength and the fluidity of the methacrylic resin composition, the temperature is preferably 140 °C or lower and more preferably 130 °C or lower. When the methacrylic resin composition has an intermediate point glass transition temperature within such a range, the methacrylic resin composition can exhibit good heat deformation resistance and a balance with other physical properties such as the strength and the molding fluidity can be achieved.

The intermediate point glass transition temperature can be measured by the method described in Examples to be descried later.

The intermediate point glass transition temperature can be adjusted by using the above-described methacrylic resin of a preferred embodiment, setting the amount of the light diffusing filler added within the range of a preferred embodiment, or setting the amount of the other components added within the range of a preferred embodiment.

- Viscosity and Tg -

The viscosity at a shear rate of 100 (1/second) at 260 °C in the methacrylic resin composition of the present embodiment is preferably 200 to 1500 Pa·s.

In the methacrylic resin composition of the present embodiment, it is preferable that the viscosity of the methacrylic resin composition at a shear rate of 100 (1/second) at 260 °C and the intermediate point glass transition temperature (Tg) of the methacrylic resin composition satisfy any of the following relationships i) to iii):

> i) the viscosity at a shear rate of 100 (1/second) at 260 °C is 1000 Pa·s or more and 1500 Pa·s or less, and the intermediate point glass transition temperature is 111 °C or higher and 130 °C or lower,
> ii) the viscosity at a shear rate of 100 (1/second) at 260 °C is 500 Pa·s or more and less than 1000 Pa·s, and the intermediate point glass transition temperature is 113 °C or higher and 130 °C or lower,
> iii) the viscosity at a shear rate of 100 (1/second) at 260 °C is 200 Pa·s or more and less than 500 Pa·s, and the intermediate point glass transition temperature is 115 °C or higher and 130 °C or lower.

In a methacrylic resin composition having a relatively high viscosity such as 1000 Pa·s or more and 1500 Pa·s or less, because molecular movements of the methacrylic resin are slow even at a resin temperature near Tg. Thus, if Tg is 111 °C or higher (preferably 111 °C or higher and 130 °C or lower), it is possible to effectively suppress bleed-out of an additive in the methacrylic resin composition, and it is possible to suppress bleed-out of an additive and stabilize the light transmission and diffusion properties even when used in space where the temperature and the humidity are increased, as in the inside of a lamp housing of an automobile. When the viscosity of the methacrylic resin composition is 500 Pa·s or more and less than 1000 Pa·s, it is preferable that Tg is 113 °C or higher (preferably 113 °C or higher and 130 °C or lower) for suppressing bleed-out of an additive and stabilizing the transmission and diffusion properties of light when the methacrylic resin composition is used in space where the temperature and the humidity are increased. When it is 200 Pa·s or more and less than 500 Pa·s, because the viscosity is relatively low, molecular movements are active. Thus, it is preferable that Tg is 115 °C or higher (preferably 115 °C or higher 130 °C or lower) for suppressing bleed-out of an additive and stabilizing the transmission and diffusion properties of light when used in space where the temperature and the humidity are increased.

The higher the viscosity at a shear rate of 100 (1/second) at 260 °C and/or the higher Tg, the slower molecular movements of the methacrylic resin become even when exposed to the same high temperature, and bleed-out of an additive in the methacrylic resin composition can be suppressed more effectively. Even when used in space where the temperature and the humidity are increased, as in the inside of a lamp housing of an automobile, bleed-out of an additive can be suppressed and the light transmission and diffusion properties can be stabilized.

The viscosity at a shear rate of 100 (1/second) at 260 °C and Tg can be adjusted by modifying the monomer composition, the molecular weight, the molecular weight distribution of the methacrylic resin, and the type and amount of the additive, and the like in the methacrylic resin composition. Note that the viscosity at a shear rate of 100 (1/second) at 260 °C can be measured by the method described in Examples to be described later.

- Residual monomer amount -

The amount of total residual monomers contained in the methacrylic resin composition of the present embodiment is preferably 9000 mass ppm or less and more preferably 8000 mass ppm or less. When the amount is reduced to 8000 mass ppm or less, it is possible to effectively prevent a defect such as a vent-up when the methacrylic resin composition is produced by melt-kneading. Further, even in a resin material as that of the present embodiment in which the flow front of the resin is likely to be disturbed during molding due to inclusion of the light diffusing filler and molding failures due to the molding gas are likely to occur, a molded article having a large length L can be satisfactorily molded. This property is particularly useful in injection molding of a molded article having a large molded article length L such as a members for an automobile.

The total residual monomers contained in the methacrylic resin composition can be measured by analyzing the monomer component species analyzed according to the (Analysis of structural unit of methacrylic resin) section to be described later and other monomer component species of the resin used by using gas chromatogram (GC) as described later.

The amount of total residual monomers contained in the methacrylic resin composition is more preferably 6000 mass ppm or less, even more preferably 5000 mass ppm or less, even more preferably 4000 mass ppm or less, and particularly preferably 3000 mass ppm or less. The amount of total residual monomers contained in the methacrylic resin composition can be reduced in production of the methacrylic resin by, for example, continuing the polymerization until an exothermic peak is observed during suspension polymerization, or raising the temperature to 88 °C or higher after the exothermic peak is observed and holding the temperature for 30 minutes or longer. In the solution polymerization, reduction can be achieved by setting the polymerization temperature to a temperature of (1 minute half-life temperature - 20 °C) or higher. During production of the methacrylic resin composition, the residual monomer can be reduced by using melt-kneading or by removing the volatile components by vacuum venting during melt-kneading.

The mass ratio of the methacrylic resin in 100 mass% of the methacrylic resin composition of the present embodiment is preferably 80 to 99 mass%, more preferably 90 to 99 mass%, even more preferably 94 to 99 mass%, still even more preferably 95 to 99 mass%, and particularly preferably 95 to 98 mass%.

The mass ratio of the light diffusing filler in 100 mass% of the methacrylic resin composition of the present embodiment is preferably 0.9 to 6 mass%, more preferably 1 to 6 mass%, and even more preferably 1 to 5 mass%.

The mass ratio of the ultraviolet absorber in 100 mass% of the methacrylic resin composition of the present embodiment is preferably 0.01 to 0.3 mass% and more preferably 0.015 to 0.19 mass%.

The ratio of the total mass of the methacrylic resin, the light diffusing filler, and the ultraviolet absorber in 100 mass% of the methacrylic resin composition of the present embodiment is preferably 90 mass% or more, more preferably 95 mass% or more, even more preferably 98 mass% or more, and is preferably 100 mass% or less, more preferably 99.9 mass% or less, and even more preferably 99.8 mass% or less.

For achieving a more excellent molding processability and enabling filling even into a large-sized molded article or a narrow flow path, the methacrylic resin composition of the present embodiment preferably has a spiral length of 24 cm or more, more preferably 25 cm or more, even more preferably 28 cm or more, and particularly preferably 31 cm or more, wherein the spiral length is measured using an injection molding machine (EC-100SX manufactured by Shibaura Machine Co., Ltd.) under conditions of a resin temperature of 250 °C, a mold temperature of 60 °C, an injection pressure of 75 MPa, and an injection time of 20 seconds.

Note that the spiral length can be measured by the method described in Examples to be described later. In addition, the spiral length can be adjusted by using the above-described methacrylic resin of a preferred embodiment, setting the addition amount of the light diffusing filler within the range of a preferred embodiment, or setting the addition amount of the other components within the range of a preferred embodiment.

[Molded article]

The molded article of the present embodiment includes the methacrylic resin composition of the present embodiment mentioned above. For example, the molded article is a molded article obtained by molding the methacrylic resin composition of the present embodiment mentioned above. In particular, the molded article of the present embodiment is preferably an injection molded article obtained by injection molding.

Examples of a method for obtaining a resin molded article include known molding methods such as known injection molding method, extrusion molding method, and pressure molding method, and the obtained molded article may be secondarily molded using a known molding method such as a pressure forming method or a vacuum forming method.

In the case of injection molding, the molding temperature is preferably 200 °C or higher and 320 °C or lower.

From the viewpoint of productivity, the temperature is more preferably 210 °C or higher, and even more preferably 220 °C or higher, and from the viewpoint of preventing yellowing of the methacrylic resin composition due to decomposition of the resin, the temperature is more preferably 300 °C or lower, and even more preferably 290 °C or lower.

The molded article of the present embodiment is preferably a molded article in a thin elongated shape.

Here, the "thin elongated shape" refers to a shape in which the thickness of the thinnest portion other than the portion having the channel structure of the molded article is smaller than 4 mm, and the length in the flow direction of the molded article, i.e., the flow length (N) of the resin, is longer than the length (V) in the direction perpendicular to the flow direction of the resin.

In the thin elongated shaped molded article, the relationship between the flow length N (mm) and the length V (mm) in a direction perpendicular to the flow direction of the resin satisfies more preferably N/V > 1.2, and even more preferably N/V > 1.3.

(Thickness t)

As described above, the thickness t refers to the thickness of the thinnest portion other than the portion having a channel structure of the molded article, i.e., the thinnest portion of the flow cross section when the molded article of the present embodiment is cut in a direction perpendicular to the flow direction.

In a molded article, a partially leaf vein-like channel structure may be provided for promoting the flow, or a channel structure may be provided for welding, fitting, screwing, tapping with other members. The thickness t of the molded article of the present embodiment refers to the thickness of the thinnest portion other than the portion having such a channel structure, not the thickness of the portion having the channel structure. For effectively reducing the light source image of an internal light source, the thickness t is preferably 1 mm or more, more preferably 1.3 mm or more, and even more preferably 1.5 mm or more. Further, for providing a molded article that is bright and has a good visibility when light is incident on the molded article, it is preferably 5 mm or less, more preferably 4.5 mm or less, even more preferably 4 mm or less, and still even more preferably 3.5 mm or less.

(Length L)

The length L of the molded article in the present embodiment refers to the length from a gate in the molded article to the position farthest from the gate. When two gates are used and the midpoint between a gate 1 and a gate 2 is defined as the midpoint 1, the length L is the largest length among the length from the position U farthest from the midpoint 1 to the gate closest to the position U and the largest length from the gate 1 or the gate 2 to the midpoint 1. When three gates are used, the midpoint between the gate 1 and the gate 2 is defined as the midpoint 1, the midpoint between the gate 1 and the gate 3 is defined as the midpoint 2, the midpoint between the gate 2 and the gate 3 is defined as the midpoint 3, the length L is the largest length among the length from the position W farthest from the midpoint 1 to the gate closest to the position W, the length from the position X farthest from the midpoint 2 to the gate closest to the position X, the length from the position Y farthest from the midpoint 3 to the gate closest to the position Y, the length from the gate 1 or the gate 2 to the midpoint 1, the length from the gate 1 or 3 to the midpoint 2, and the largest length from the gate 2 or the gate 3 to the midpoint 3. When four or more gates are used, similar measurements are made in the same manner.

The midpoint between gates and the length L described above can be measured along the surface of a molded article by an R gauge, a pin gauge, a digital caliper, a micrometer, or the like. When the molded article has a spherical shape or the like and a plurality of midpoints are present, any one of them may be adopted as the midpoint to determine the farthest position and the length L.

For the purpose of obtaining a product in which an internal light source is large for providing a molded article that is bright and has a good visibility when light is incident on the molded article, arranging a lot of internal light sources, and preventing flows of the resin to be merged and bursting of the gas contained in the light diffusing filler, to reduce points where weld lines are generated when the resin and the resin flow are merged and to obtain a molded article in which light is diffused uniformly, L is more preferably 130 mm or more, more preferably 150 mm or more, even more preferably 180 mm or more, further preferably 210 mm or more, even further preferably 240 mm or more, and particularly preferably 270 mm or more.

In order to measure the length L, it is necessary to use a mold having a final filling portion in the mold. By using a mold having a final filling portion in the mold, it is possible to evaluate whether a molded article having L in the above preferred range is obtained while taking into consideration generation of a gas from the resin composition to be filled, and the force inhibiting the flow of the resin composition acting in the opposite direction to the flow direction of the resin composition by release of the gas contained in the light diffusing filler.

(Ratio L/t of length L and thickness t of molded article)

The ratio L/t of the length L and the thickness t is preferably 65 or more, more preferably 70 or more, even more preferably 75 or more, further preferably 90 or more, and even further preferably 110 or more for arranging an appropriate internal light source and forming a molded article that is bright and having a good visibility when light is incident on the molded article.

In particular, the injection molded article of the present embodiment preferably has a thickness t of 1 to 5 mm, a length L of 130 mm or more, and L/t of 65 or more.

(Diffusivity of molded article)

In the case of an injection molded article, the diffusivity of the molded article of the present embodiment is preferably stable regardless of the distance from a gate. In particular, when used as a member for a vehicle, the diffusivity is required to be stable regardless of the place of the molded article for achieving the stability of visibility. As the distance from the gate increases, the pressure upon injection molding becomes less likely to be transmitted and the diffusivity tends to change from that in vicinities of the gate. For achieving stabilization, the diffusivity can be stabilized by adjusting the type and amount of the diffusing material, the fluidity of the methacrylic resin serving as a base, and the molding conditions. As for the change in the diffusivity, it is preferable that the difference between the diffusivity D at the position from 30 mm from a gate and the diffusivity DH at the position from 150 mm from the gate is small, it is more preferable that the difference between the diffusivity D and the diffusivity DT at the position from 200 mm from the gate is small, it is further preferable that the difference between the diffusivity D and the diffusivity DG at the position from 240 mm from the gate is small. As for the differences between the diffusivity D and the diffusivities DH, DT, and DG, each difference between the diffusivities is preferably 5% or less, each difference between the diffusivities is more preferably 3% or less and even more preferably 2% or less. Such a molded article can be suitably used as a member for a vehicle.

The diffusivities D, DH, DT, and DG can be measured in respective positions where the length measured from the gate along the surface of the mold is 30 mm, 150 mm, 200 mm, and 240 mm, for example using a diffusiometer to be described below. Considering holes or the like provided in the molded article for attachment to other members, it is suffice that a part of the molded article is in a state where the difference in the diffusivity is small, and a small difference in the diffusivity is preferred because it leads to stability of the visibility.

(Application)

Because the molded article of the present embodiment is excellent in heat deformation resistance, long-term properties, permits light to be excellently transmitted, and is excellent in light diffusion property, it can be suitably used as members used for construction, members for vehicles, electric and electronic members, lighting members, and the like. Specifically, it is suitable as an illumination cover, a signboard, an interior or exterior member for a vehicle, such as a member for a vehicle lamp, an emblem, a shift lever, a switch panel, and a light guide portion of a button. In particular, because it can maintain the shape thereof even when used in a close proximity to a high-output LED, can sufficiently reduce the internal source image, and is bright and excellent in visibility, it is particularly suitable as a member for a vehicle lamp and a member for reducing the light source image, such as a lamp cover disposed inside a combination lamp (in particular, rear combination lamp).

EXAMPLES

Although the present disclosure will be described hereinafter with reference to examples, the present disclosure is not limited to these.

[Raw materials]

(Methacrylic resin)

The raw materials of methacrylic resins used to produce methacrylic resin compositions are as follows.

- Methyl methacrylate (MMA): manufactured by Asahi Kasei Corp. (in which 2.5 ppm of 2,4-dimethyl-6-t-butylphenol manufactured by CBC Group is added as a polymerization inhibitor)
- Methyl acrylate (MA): manufactured by Mitsubishi Chemical Corporation (in which 14 ppm of 4-methoxyphenol manufactured by Kawaguchi Chemical Industry Co., Ltd. is added as a polymerization inhibitor)
- Ethyl acrylate (EA): manufactured by Mitsubishi Chemical Corporation

- Cyclohexylmaleimide (CMI): manufactured by NIPPON SHOKUBAI CO., LTD.
- n-octyl mercaptan: manufactured by Arkema S. A.
- 2-ethylhexyl thioglycolate: manufactured by Tokyo Chemical Industry Co., Ltd.
- t-butylperoxy-2-ethylhexanoate: manufactured by NOF CORPORATION
- Perhexa 22: manufactured by NOF CORPORATION
- Meta-xylene: manufactured by Tokyo Chemical Industry Co., Ltd., used as a polymerization solvent
- Lauroyl peroxide: manufactured by NOF CORPORATION
- Tricalcium phosphate: manufactured by NIPPON CHEMICAL INDUSTRIAL CO., LTD., used as a suspending agent
- Calcium carbonate: manufactured by Shiraishi Kogyo Kaisha, Ltd., used as a suspending agent
- Sodium lauryl sulfate: manufactured by Wako Pure Chemical Industries, Ltd., used as a suspending aid

(Light diffusing filler)

- Crosslinked silicone resin: manufactured by Momentive Japan (average particle diameter: 2 $\mu$m, refractive index: 1.42)
- Crosslinked styrene-MMA resin: manufactured by Sekisui Kasei Co., Ltd. (average particle diameter: 5 $\mu$m, refractive index: 1.53)
- Barium sulfate: manufactured by Takehara Kagaku Kogyo Co., Ltd. (average particle diameter: 5 $\mu$m, refractive index: 1.64)
- Titanium dioxide: manufactured by ISHIHARA SANGYO KAISHA, LTD. (average particle diameter: 0.21 $\mu$m, refractive index: 2.71)

(Ultraviolet absorber)

- Tinuvin P: manufactured by BASF, melting point 128 °C, benzotriazole-based ultraviolet absorber (maximum absorption wavelength: 345 nm)
- SEESORB 703: manufactured by SHIPRO KASEI KAISHA, LTD., Melting point 138 °C, benzotriazole-based ultraviolet absorber (maximum absorption wavelength: 355 nm)
- Tinuvin 770DF: manufactured by BASF, melting point 137 °C, hindered amine-based photostabilizer (maximum absorption wavelength: 340 nm)

(Thermal stabilizer)

- ADKSTAB 2112: manufactured by ADEKA CORPORATION, melting point 180 °C
- Irganox 1010: manufactured by BASF, melting point 110 °C
- ADKSTAB AO-80: manufactured by ADEKA CORPORATION, melting point 110 °C

(Strength modifier)

- Kane-ace M-210: manufactured by KANEKA CORPORATION, refractive Index 1.491

(Lubricant)

- KALCOL 8098: manufactured by Kao Corporation

(Dye)

- MACROLEX Red EG: manufactured by LANXESS K.K. (C. I. Solvent Red 135)

[Measurement and evaluation methods]

(Measurement of molecular weight of methacrylic resin)

The weight average molecular weight (Mw) and molecular weight distribution (Mw/Mn) (Mn is a number average molecular weight) of a methacrylic resin were measured with the following devices and under the following conditions.

- Measurement device: Gel Permeation Chromatography (HLC-8320GPC) manufactured by Tosoh Corporation
- Measurement conditions:

Column: one TSK guard column Super H-H, two TSK gel Super HM-M, and one TSK gel Super H2500 were connected in series in the state of order and used. In this column, high molecular weight components elute earlier, and low molecular weight components elute later.
Detector: RI (differential refractometer) detector
Detection sensitivity: 3.0 mV/min
Column temperature: 40 °C
Sample: 20 mL of tetrahydrofuran solution with 0.02 g of methacrylic resin
Injection amount: 10 μL
Developing solvent: tetrahydrofuran, flow rate: 0.6 mL/min, and 0.1 g/L of 2,6-di-t-butyl-4-methylphenol (BHT) was add as the internal standard.

The following ten kinds of polymethyl methacrylate having known monodisperse peak molecular weights and different molecular weights (manufactured by Polymer Laboratories; PMMA Calibration Kit M-M-10) were used as standard samples for the calibration curve.
Since the polymethyl methacrylate of the standard samples used for the standard samples for the calibration curve each have a single peak, the peak corresponding to each is expressed as the weight peak molecular weight Mp. In this respect, it was distinguished from the peak top molecular weight calculated when there were multiple peaks for one sample.

Weight peak molecular weight (Mp)

| | |
|---|---|
| Standard sample 1 | 1,916,000 |
| Standard sample 2 | 625,500 |
| Standard sample 3 | 298,900 |
| Standard sample 4 | 138,600 |
| Standard sample 5 | 60,150 |
| Standard sample 6 | 27,600 |
| Standard sample 7 | 10,290 |
| Standard sample 8 | 5,000 |
| Standard sample 9 | 2,810 |
| Standard material 10 | 850 |

The RI detection intensity relative to the elution time of the methacrylic resin was measured under the conditions listed above.
The weight average molecular weight (Mw), the number average molecular weight (Mn), the molecular weight distribution (Mw/Mn), and the presence amount of molecular weight components of one fifth or less of the peak top molecular weight (Mp) of the methacrylic resin were determined based on the area in the GPC elution curve and a cubic approximation of the calibration curve.

(Analysis of structural unit of methacrylic based resin)

A monomer unit was identified by $^1$H-NMR measurement, and its presence amount (mass%) was calculated.

The measurement conditions for the $^1$H-NMR measurement are as follows.

Device: JEOL-ECA500
Solvent: $CDCl_3$-$d_1$ (deuterated chloroform)
Sample: 1 g of the methacrylic resin was dissolved in 10 ml of acetone, 20 ml of methanol was added dropwise, and the mixture was filtered. Next, 15 mg of insoluble matters that had been vacuum-dried at 40 °C for 15 hours were dissolved in 0.75 mL of $CDCl_3$-$d_1$ to obtain a sample for measurement.

(Amount of unsaturated double bond end of methacrylic resin)

A monomer unit was identified by $^1$H-NMR measurement, and its presence amount (mol%) in the methacrylic resin was calculated.
The amount of unsaturated double bond end was calculated from the integral value of unsaturated double bond end peak (5.4 ppm to 5.6 ppm) and the peak integral value (3.6 ppm) of the methyl group bonded to the oxygen atom of the ester group of the methacrylic resin.
The measurement conditions for the $^1$H-NMR measurement are as follows.

Device: JEOL-ECA500
Scanning: 5000 times
Measurement temperature: room temperature
Observation nucleus: $^1$H (500 MHz)
Solvent: $CDCl_3$-$d_1$ (deuterated chloroform)
Sample: 1 g of the methacrylic resin was dissolved in 10 ml of chloroform, and 20 ml of methanol was added dropwise, and the mixture was filtered. The insoluble matters after filtration were dissolved again in 10 ml of chloroform, 20 ml of methanol was added dropwise, and the mixture was filtered, where the operation was repeated twice. Next, 75 mg of the final remaining insoluble matters that had been vacuum-dried at 40 °C for 15 hours were dissolved in 0.75 mL of $CDCl_3$-$d_1$ to obtain a sample for measurement. If the insoluble matters after the final filtration were less than 75 mg, the operation was repeated until 75 mg was obtained.

(Elemental analysis)

The monomer units in a methacrylic resin 9 of Production Example 9 to be described later were identified by elemental analysis.
Sample: 1 g of the methacrylic resin was dissolved in 10 ml of acetone, 20 ml of methanol was added dropwise, and the mixture was filtered. Next, 7.5 mg of insoluble matters that had been vacuum-dried at 40 °C for 15 hours were collected in a platinum pan to be as a sample. The mean value of two measurements measured using TN-110 manufactured by Mitsubishi Chemical Analytech Co., Ltd. under the following measurement conditions was used as the total nitrogen content. The sample container (platinum pan) had been introduced into the device and subjected to baking in advance. From the measured [total nitrogen content], the [content of CMI monomer unit (wt %)], and the [content of MMA monomer unit (wt %)] in the polymer were determined according to the following formulae (A) and (B).

Measuring conditions

Temperature: pyrolysis furnace 800 °C, oxidation furnace 900 °C
Carrier gas: $O_2$ (300 mL/min.), $Ar/O_2$ (400 mL/min.)
Standard sample: pyridine/toluene solution
Detector: vacuum chemiluminescence detector
Range: Low

$$[\text{Total nitrogen content}] \times (\text{molecular weight of CMI: } 179 \: / \: \text{molecular weight of nitrogen: } 14) = [\text{content of CMI monomer unit (wt\%)}]$$

Formula (A)

100 (wt%) - [content of CMI monomer unit (wt%)] = [content of MMA monomer unit (wt%)])

(Measurement of residual monomer amount in methacrylic resin composition)

A measurement was carried out by a calibration curve method using a GC.

More specifically, a part of a produced methacrylic resin composition was collected and weighed, this sample was dissolved in chloroform to prepare a 0.5-mass% solution, and nonane was added as an internal standard. A capillary column (manufactured by Phenomenex Inc., product number: ZB-1) having an inner diameter of 0.32 mm and a length of 30 m was used in FID gas chromatography (product number: GC2025) manufactured by Shimadzu Corporation. In the measurement, after the temperature was held at 45 °C for 5 minutes, the temperature was raised to 110 °C at a heating rate of 10 °C/min, then raised to 200 °C at 30 °C/min, further raised to 240 °C at 10 °C/min, then raised to 300 °C at 50 °C/min, and held at 300 °C for 10 minutes.

(Total light transmittance)

The total light transmittance at a portion with a thickness of 2 mm in a plate-shaped sample was measured according to JIS K7361 using NDH7000 manufactured by Nippon Denshoku Industries Co., Ltd. Note that a plate-shaped sample B with 100 mm × 100 mm × 2 mm produced by injection molding to be described later was used as the plate-shaped sample.

When the total light transmittance was 60% or more, it was evaluated as double circle (particularly excellent); when the total light transmittance was 40 % or more, it was evaluated as O (good); when the total light transmittance was 30 % or more, it was evaluated as Δ (at practically sufficient level); when the total light transmittance was 5 % or more, it was evaluated as ΔΔ (at practically allowable level); and when the total light transmittance was less than 5 %, it was evaluated as × (poor).

(Diffusivity)

The diffusivity at a portion with a thickness of 2 mm in a plate-shaped sample was determined by measuring the brightness (intensity of transmitted light) at 5 °, 20 °, and 70 ° using GC5000 manufactured by Nippon Denshoku Industries Co., Ltd., and the diffusivity was calculated according to DIN 5036 by the following formula. Note that a plate-shaped sample B with 100 mm × 100 mm × 2 mm produced by injection molding to be described later was used as the plate-shaped sample.

(Calculation of diffusivity)

Diffusivity = (intensity of transmitted light at 20 ° + intensity of transmitted light at 70 °) / (2 × intensity of transmitted light at 5 °) × 100

When the diffusivity was 30% or more, it was evaluated as double circle (particularly excellent); when the diffusivity was 10 % or more, it was evaluated as O (good); when the diffusivity was 5 % or more, it was evaluated as Δ (practically allowable); and when the diffusivity was less than 5 %, it was evaluated as × (poor).

(Long-term use property)

A 2000-hour test was conducted under the test conditions of a black panel temperature of 63 °C and a rainfall of 18 minutes out of 120 minutes using Sunshine Carbon Arc Weather Meter manufactured by Suga Test Instruments Co., Ltd. The long-term use property were evaluated based on the color differences (ΔE) before and after testing on a 3-mm thick sample measured in a C-light source 10° field transmission mode using TC8600 manufactured by Nippon Denshoku Industries Co., Ltd. Note that a plate-shaped sample A with 100 mm × 100 mm × 3 mm produced by injection molding to be described later was used as the plate-shaped sample

When ΔE was 0.5 or less, it was evaluated as double circle (particularly excellent); when ΔE was 1.4 or less, it was evaluated as O (good); when ΔE was 1.8 or less, it was evaluated as Δ (at practically sufficient level); and when ΔE was more than 1.8, it was evaluated as × (poor).

(Moldability)

EC-100SX manufactured by Shibaura Machine Co., Ltd. was set to the following conditions: a cylinder temperature of 280 °C, a mold temperature of 50 °C, an injection rate of 130 mm/second, and a primary holding of 50 MPa. By using an evaluation die which has a pin gate at the position of 50 mm from the left side and the upper side, and with which a molded article with dimensions of 350 mm × 100 mm × 2 mm (thickness) can be formed, and the presence or absence of a molding defect in the area from the flow end to the 20-mm upstream position of a flat plate-shaped sample was evaluated. When the resin is completely filled using the above-described evaluation mold, a molded article of 350 mm × 100 mm × t = 2 mm, length L = 304 mm, and L/t = 152 is obtained.

When the resin was filled to the end of the mold, and no molding defect was observed, it was evaluated as O (excellent); when a molding defect was slightly observed regardless of the degree of filling of the resin, but improvement could be made when the molding conditions other than the temperature condition and the injection speed were changed, it was evaluated as Δ (at practically allowable level); and when a molding defect was observed and no improvement could be made even when the molding conditions other than the temperature condition and the injection speed were changed, it was evaluated as × (poor).

(Molding fluidity)

- Measurement of spiral length -

A test to determine the relative fluidity according to the distance at which each resin flowed through a spiral-shaped cavity having a constant cross-sectional area was conducted.

    Injection molding machine: EC-100SX (produced by Shibaura Machine Co., Ltd.)
    Mold for measurement: a mold having a groove in an Archimedean spiral shape of 2 mm in depth and 12.7 mm in width on the surface of the mold from the central portion of the surface
    Injection conditions
    Resin temperature: 250 °C
    Mold temperature: 60 °C
    Maximum injection pressure: 75 MPa
    Injection time: 20 seconds
    A resin was injected into the central portion of the mold surface under the above conditions.

After 20 seconds after the end of injection, a spiral-shaped molded article was taken out, and the length (cm) of the spiral portion was measured. This was used as an index for an evaluation of the fluidity during molding.

When the SFD (spiral-length) was 31 cm or more, it was evaluated as double circle (particularly excellent); when the SFD was 28 cm or more, it was evaluated as O (good); when the SFD was 25 cm or more, it was evaluated as Δ (at practically sufficient level); and when the SFD was 24 cm or less, it was evaluated as ΔΔ (usable, but slightly inferior).

Note that the mold used for measuring the spiral length was grooved into an Archimedean spiral shape up to 107 cm in the spiral length, and had a channel of 0.5 mm in depth on the surface of the mold beyond 107 cm extending to the outside of the mold, and the final fill portion was not present in the mold.

(Heat deformation resistance)

As an index of the heat deformation resistance, the intermediate point glass transition temperature of a sample of a methacrylic resin composition cut out from a molded article was measured. After the temperature of 10 mg of the sample was raised from 40 °C to 210 °C at a temperature increase rate of 10 °C/min, the temperature was lowered to 40 °C and was increased again from 40 °C to 210 °C at a temperature increase rate of 10 °C/min using a differential scanning calorimeter (Diamond DSC manufactured by Perkin Elmer Japan Co., Ltd.) in a nitrogen gas atmosphere using α-alumina as a reference, in accordance with JIS K-7121, to thereby determine the intermediate point glass transition temperature from the second DSC curve. When the intermediate point glass transition temperature was 118 °C or higher, it was evaluated as double circle (particularly excellent); when the intermediate point glass transition temperature was 111 °C or higher, it was evaluated as O (good); when the intermediate point glass transition temperature was 105 °C or higher, it was evaluated as Δ (practically allowable); and when the intermediate point glass transition temperature was lower than 105 °C, it was evaluated as × (poor). When a plurality of inflection points were observed in the glass transition curve, the value of the largest inflection point was adopted.

The intermediate point glass transition temperature of a methacrylic resin can also be measured by the same method as described above.

(Thermal decomposition resistance)

From a molded article, 10 mg of a sample of a methacrylic resin composition was cut out and a measurement was made using a differential thermal balance (Thermo PlusEvo2 manufactured by Rigaku Corporation). The temperature was increased from room temperature at 20 °C/min in a nitrogen atmosphere. After the temperature was held at 100 °C for 5 minutes, the temperature was raised again to 290 °C at 20 °C/min and was held for 30 minutes. The degree of the thermal decomposition during holding at 290 °C for 30 minutes was evaluated. When the degree of the thermal decomposition was less than 1.5%, it was evaluated as double circle (particularly excellent); when the degree of the thermal decomposition was less than 3%, it was evaluated as O (good); when the degree of the thermal decomposition was less than 4%, it was evaluated as △ (at practically sufficient level); and when the degree of the thermal decomposition was 4% or more, it was evaluated as × (poor).

(Impact resistance)

When the result of an unnotched Charpy impact test performed according to JIS K7111-1 was 20 kJ/m$^2$ or more, it was evaluated as double circle (excellent); when the result was 17 kJ/m$^2$ or more, it was evaluated as O (good); when the result was 15 kJ/m$^2$ or more, it was evaluated as △ (at practically sufficient level); and the when result was less than 15 kJ/m$^2$, it was evaluated as × (poor). When it is 15 kJ/m$^2$ or more, a molded article having good strength of an attachment portion with other members can be obtained.

(Bleed-out resistance property)

A plate-shaped sample A was allowed to stand while being hanged in a constant temperature and humidity chamber manufactured by Espec Corporation under conditions of 85 °C × 85% RH for 1000 hours. After the sample was removed from the tester, the intensity of transmitted light at a measurement angle of 5 ° was measured and compared with the value before the test. When the range of change in the intensity of transmitted light is within 10%, it was evaluated as O (good); when the range of change was within 15%, it was evaluated as △ (practically allowable); and when the range of change was more than 15%, it was evaluated as × (poor). When the range of change in the intensity of transmitted light is small, the range of change in the intensity of transmitted light due to bleed-out of an additive is small, and usage in a high-temperature and high-humidity environment such as in an automobile lamp housing or in a vehicle is possible.

(Measurement of viscosity)

The viscosity of a methacrylic resin composition was measured at 260 °C and a shear rate of 100 (1/second) using a twin capillary rheometer. Note that a long die used had a length of 16 mm, a diameter of 1 φ mm, and an incidence angle of 180 °, the short die has L = 0.25 mm, a diameter of 1 φ, and an incidence angle of 180 °, and the result was corrected by Bagrey correction.

(Yellowishness)

A flat plate-shaped sample B to be described later was placed at a position 30 mm from a white LED light source (TSPA22 × 8 - 57W), and the light source was turned on in a dark chamber, and the color of diffused light through the flat plate-shaped sample B was checked. When the difference between the color of the flat plate when the light source was visually observed through the plate-shaped sample B was and the color of the light source, it was evaluated as O (good); and when the color of the flat plate when the light source was visually observed through the plate-shaped sample B was significantly different from the color of the light source and the flat plate appeared yellow, it was evaluated as △ (practically allowable, but there is problem in use for a member for an automobile, etc.). No evaluation was made in Example 3 because the coloring dye was used for intentional dyeing in red.

<Production Example 1 (preparation of methacrylic resin 1)>

A vessel having a stirrer was charged with 2 kg of ion-exchanged water, 65 g of tricalcium phosphate, 39 g of calcium carbonate, and 0.39 g of sodium lauryl sulfate to obtain a mixed solution.

Next, 26 kg of ion-exchanged water was charged into a 60 L reactor and the temperature was raised to 80 °C, and the entire mixture, 21.2 kg of methyl methacrylate, 0.43 kg of methyl acrylate, 27 g of lauroyl peroxide, and 55 g of n-octyl mercaptan were added.

Next, suspension polymerization was performed while the temperature was kept at about 80 °C. After the exothermic peak was observed, the temperature was raised to 92 °C at a rate of 1 °C/min, and aging was performed for 60 minutes to substantially complete the polymerization reaction.

Next, a 20-mass% sulfuric acid was added to lower the temperature to 50 °C and dissolve the suspending agent, then the polymerization reaction solution was passed through a 1.68 mm-mesh sieve to remove aggregates, and the obtained bead-like polymer was washed, dehydrated and dried to obtain polymer fine particles (methacrylic resin 1).

The resultant resin had a weight average molecular weight of 108,000, a molecular weight distribution (Mw/Mn) of 1.85, and a presence amount of molecular weight components of one fifth or less of the peak top molecular weight (Mp) of 4.4%. In addition, the monomer unit had MMA/MA of 98/2 mass% and an amount of unsaturated bond end of 0.008 mol%.

<Production Example 2 (preparation of methacrylic resin 2)>

A vessel having a stirrer was charged with 2 kg of ion-exchanged water, 65 g of tricalcium phosphate, 39 g of calcium carbonate, and 0.39 g of sodium lauryl sulfate to obtain a mixed solution.

Next, 26 kg of ion-exchanged water was charged into a 60 L reactor and the temperature was raised to 80 °C, and the entire mixture, 20.5 kg of methyl methacrylate, 1.32 kg of ethyl acrylate, 33 g of lauroyl peroxide, and 27.5 g of n-octyl mercaptan were added.

Next, suspension polymerization was performed while the temperature was kept at about 80 °C. After the exothermic peak was observed, the temperature was raised to 92 °C at a rate of 1 °C/min.

Next, aging was performed for 60 minutes to substantially complete the polymerization reaction.

Next, a 20-mass% sulfuric acid was added to lower the temperature to 50 °C and dissolve the suspending agent, then the polymerization reaction solution was passed through a 1.68 mm-mesh sieve to remove aggregates, and the obtained bead-like polymer was washed, dehydrated and dried to obtain polymer fine particles (methacrylic resin 2).

The resultant resin had a weight average molecular weight of 189,000, a molecular weight distribution (Mw/Mn) of 1.85, and a presence amount of molecular weight components of one fifth or less of the peak top molecular weight (Mp) of 4.3%. In addition, the monomer unit had MMA/EA of 94/6 mass% and an amount of unsaturated bond end of 0.009 mol%.

<Production Example 3 (preparation of methacrylic resin 3)>

A vessel having a stirrer was charged with 2 kg of ion-exchanged water, 65 g of tricalcium phosphate, 39 g of calcium carbonate, and 0.39 g of sodium lauryl sulfate to obtain a mixed solution.

Next, 26 kg of ion-exchanged water was charged into a 60 L reactor and the temperature was raised to 80 °C, and the entire mixture, 21.2 kg of methyl methacrylate, 0.43 kg of methyl acrylate, 27 g of lauroyl peroxide, and 88 g of n-octyl mercaptan were added.

Next, suspension polymerization was performed while the temperature was kept at about 80 °C. After the exothermic peak was observed, the temperature was raised to 92 °C at a rate of 1 °C/min, and aging was performed for 60 minutes to substantially complete the polymerization reaction.

Next, a 20-mass% sulfuric acid was added to lower the temperature to 50 °C and dissolve the suspending agent, then the polymerization reaction solution was passed through a 1.68 mm-mesh sieve to remove aggregates, and the obtained bead-like polymer was washed, dehydrated and dried to obtain polymer fine particles (methacrylic resin 3).

The resultant resin had a weight average molecular weight of 73,000, a molecular weight distribution (Mw/Mn) of 1.85, and a presence amount of molecular weight components of one fifth or less of the peak top molecular weight (Mp) of 4.7%. In addition, the monomer unit had MMA/MA of 98/2 mass% and an amount of unsaturated bond end of 0.007 mol%.

<Production Example 4 (preparation of methacrylic resin 4)>

A vessel having a stirrer was charged with 2 kg of ion-exchanged water, 65 g of tricalcium phosphate, 39 g of calcium carbonate, and 0.39 g of sodium lauryl sulfate to obtain a mixed solution.

Next, 23 kg of ion-exchanged water was charged into a 60 L reactor and the temperature was raised to 80 °C, and the entire mixture, 5.1 kg of methyl methacrylate, 36 g of lauroyl peroxide, and 94 g of 2-ethylhexyl thioglycolate were added.

Next, suspension polymerization was performed while the temperature was kept at about 80 °C. After the exothermic peak was observed, the temperature was raised to 92 °C at a rate of 1 °C/min, and the temperature was maintained at 92 °C to 94 °C for 30 minutes. Thereafter, the temperature was lowered to 80 °C at a rate of 1 °C/min, and then 15.3 kg of methyl methacrylate, 360 g of methyl acrylate, 15 g of lauroyl peroxide, and 41.8 g of n-octyl mercaptan were charged. The suspension polymerization was performed while the temperature was kept at about 80 °C.

After the exothermic peak was observed, the temperature was raised to approximately 92 °C at a rate of approximately 1 °C/min, and aging was performed for 60 minutes to substantially complete the polymerization reaction.

Next, a 20-mass% sulfuric acid was added to lower the temperature to 50 °C and dissolve the suspending agent, then the polymerization reaction solution was passed through a 1.68 mm-mesh sieve to remove aggregates, and the obtained bead-like polymer was washed, dehydrated and dried to obtain polymer fine particles (methacrylic resin 4).

The resultant methacrylic resin had an Mw of 83,000, a molecular weight distribution (Mw/Mn) of 2.3, and a presence amount of molecular weight components of one fifth or less of the peak top molecular weight (Mp) of 11.5%. In addition, the monomer unit had MMA/MA of 98.3/1.7 mass% and an amount of unsaturated bond end of 0.002 mol%.

<Production Example 5 (preparation of methacrylic resin 5)>

A vessel having a stirrer was charged with 2 kg of ion-exchanged water, 65 g of tricalcium phosphate, 39 g of calcium carbonate, and 0.39 g of sodium lauryl sulfate to obtain a mixed solution.

Next, 23 kg of ion-exchanged water was charged into a 60 L reactor and the temperature was raised to 80 °C, and the entire mixture, 4.95 kg of methyl methacrylate, 50 g of methyl acrylate, 36 g of lauroyl peroxide, and 110 g of 2-ethylhexyl thioglycolate were added.

Next, suspension polymerization was performed while the temperature was kept at about 80 °C. After the exothermic peak was observed, the temperature was raised to 92 °C at a rate of 1 °C/min, and the temperature was maintained at 92 °C to 94 °C for 30 minutes. Thereafter, the temperature was lowered to 80 °C at a rate of 1 °C/min, and then 15.0 kg of methyl methacrylate, 0.3 kg of methyl acrylate, 21 g of lauroyl peroxide, and 26 g of n-octyl mercaptan were charged. The suspension polymerization was performed while the temperature was kept at about 80 °C.

After the exothermic peak was observed, the temperature was raised to approximately 92 °C at a rate of approximately 1 °C/min, and aging was performed for 60 minutes to substantially complete the polymerization reaction.

Next, a 20-mass% sulfuric acid was added to lower the temperature to 50 °C and dissolve the suspending agent, then the polymerization reaction solution was passed through a 1.68 mm-mesh sieve to remove aggregates, and the obtained bead-like polymer was washed, dehydrated and dried to obtain polymer fine particles (methacrylic resin 5).

The resultant methacrylic resin had an Mw of 119,000, a molecular weight distribution (Mw/Mn) of 3.4, and a presence amount of molecular weight components of one fifth or less of the peak top molecular weight (Mp) of 23.1%. In addition, the monomer unit had MMA/MA of 98.1/1.9 mass% and an amount of unsaturated bond end of 0.003 mol%.

<Production Example 6 (preparation of methacrylic resin 6)>

A vessel having a stirrer was charged with 2 kg of ion-exchanged water, 65 g of tricalcium phosphate, 39 g of calcium carbonate, and 0.39 g of sodium lauryl sulfate to obtain a mixed solution.

Next, 23 kg of ion-exchanged water was charged into a 60 L reactor and the temperature was raised to 80 °C, and the entire mixture, 5.5 kg of methyl methacrylate, 40 g of lauroyl peroxide, and 90 g of 2-ethylhexyl thioglycolate were added.

Thereafter, suspension polymerization was performed while the temperature was maintained to about 80 °C. An exothermic peak was observed 80 minutes after the material was charged.

Then, the temperature was raised to 92 °C at a rate of 1 °C/min, and the temperature was maintained at 92 °C to 94 °C for 30 minutes. Thereafter, the temperature was lowered to 80 °C at a rate of 1 °C/min, and then 16.2 kg of methyl methacrylate, 0.75 kg of methyl acrylate, 19 g of lauroyl peroxide, and 18.7 g of n-octyl mercaptan were charged. The suspension polymerization was performed while the temperature was kept at about 80 °C. An exothermic peak was observed 105 minutes after the material was charged.

Thereafter, the temperature was raised to approximately 92 °C at a rate of approximately 1 °C/min, and aging was performed for 60 minutes to substantially complete the polymerization reaction.

Next, a 20-mass% sulfuric acid was added to lower the temperature to 50 °C and dissolve the suspending agent, then the polymerization reaction solution was passed through a 1.68 mm-mesh sieve to remove aggregates, and the obtained bead-like polymer was washed, dehydrated and dried to obtain polymer fine particles (methacrylic resin 6).

The obtained polymer fine particles were melt-kneaded in a twin screw extruder of φ 30 mm set at 240 °C, and the strands were cooled and cut to obtain resin pellets (methacrylic resin 6).

The resultant resin pellets had a weight average molecular weight of 169,000 and a molecular weight distribution (Mw/Mn) of 3.7. In addition, the presence amount (%) of the molecular weight components of one fifth or less of the value of Mp was 24.3%. In addition, the monomer unit had MMA/MA of 96.5/3.5 mass% and an amount of unsaturated bond end of 0.003 mol%.

<Production Example 7 (preparation of methacrylic resin 7)>

A vessel having a stirrer was charged with 2 kg of ion-exchanged water, 65 g of tricalcium phosphate, 39 g of calcium carbonate, and 0.39 g of sodium lauryl sulfate to obtain a mixed solution.

Next, 26 kg of ion-exchanged water was charged into a 60 L reactor and the temperature was raised to 80 °C, and the entire mixture, 21.2 kg of methyl methacrylate, 2.3 kg of methyl acrylate, 65 g of lauroyl peroxide, and 70 g of n-octyl mercaptan were added.

Next, suspension polymerization was performed while the temperature was kept at about 80 °C. After the exothermic peak was observed, the temperature was raised to 92 °C at a rate of 1 °C/min, and aging was performed for 60 minutes to substantially complete the polymerization reaction.

Next, a 20-mass% sulfuric acid was added to lower the temperature to 50 °C and dissolve the suspending agent, then the polymerization reaction solution was passed through a 1.68 mm-mesh sieve to remove aggregates, and the obtained bead-like polymer was washed, dehydrated and dried to obtain polymer fine particles (methacrylic resin 7).

The resultant methacrylic resin had an Mw of 92,000, a molecular weight distribution (Mw/Mn) of 1.86, and a presence amount (%) of the molecular weight components of one fifth or less of the value of Mp of 4.6%. The monomer unit had MMA/MA of 90/10 mass% and an amount of unsaturated double bond end of 0.008 mol%.

<Production Example 8 (preparation of methacrylic resin 8)>

A vessel having a stirrer was charged with 2 kg of ion-exchanged water, 65 g of tricalcium phosphate, 39 g of calcium carbonate, and 0.39 g of sodium lauryl sulfate to obtain a mixed solution.

Next, 23 kg of ion-exchanged water was charged into a 60 L reactor and the temperature was raised to 80 °C, and the entire mixture, 6.7 kg of methyl methacrylate, 0.07 kg of methyl acrylate, 40 g of lauroyl peroxide, and 115 g of 2-ethylhexyl thioglycolate were added.

Next, suspension polymerization was performed while the temperature was kept at about 80 °C. After the exothermic peak was observed, the temperature was raised to 92 °C at a rate of 1 °C/min, and the temperature was maintained at 92 °C to 94 °C for 30 minutes. Thereafter, the temperature was lowered to 80 °C at a rate of 1 °C/min, and then 13.4 kg of methyl methacrylate, 0.56 kg of methyl acrylate, 10 g of lauroyl peroxide, and 15 g of n-octyl mercaptan were charged. The suspension polymerization was performed while the temperature was kept at about 80 °C.

After the exothermic peak was observed, the temperature was raised to approximately 92 °C at a rate of approximately 1 °C/min, and aging was performed for 60 minutes to substantially complete the polymerization reaction.

Next, a 20-mass% sulfuric acid was added to lower the temperature to 50 °C and dissolve the suspending agent, then the polymerization reaction solution was passed through a 1.68 mm-mesh sieve to remove aggregates, and the obtained bead-like polymer was washed, dehydrated and dried to obtain polymer fine particles (methacrylic resin 8).

The resultant methacrylic resin had an Mw of 151,000, a molecular weight distribution (Mw/Mn) of 4.4, and a presence amount (%) of the molecular weight components of one fifth or less of the value of Mp of 28.5%. The monomer unit had MMA/MA of 97/3 mass% and an amount of unsaturated double bond end of 0.004 mol%.

<Production Example 9 (preparation of methacrylic resin 9)>

A vessel having a stirrer was charged with 2 kg of ion-exchanged water, 65 g of tricalcium phosphate, 39 g of calcium carbonate, and 0.39 g of sodium lauryl sulfate to obtain a mixed solution.

Next, 26 kg of ion-exchanged water was charged into a 60 L reactor and the temperature was raised to 80 °C, and the entire mixture, 20.9 kg of methyl methacrylate, 0.88 g of cyclohexylmaleimide, 40 g of t-butylperoxy-2-ethylhexanoate, and 66 g of n-octyl mercaptan were added.

Next, suspension polymerization was performed while the temperature was kept at about 75 °C. After the exothermic peak was observed, the temperature was raised to 92 °C at a rate of 1 °C/min, and aging was performed for 60 minutes to substantially complete the polymerization reaction.

Next, a 20-mass% sulfuric acid was added to lower the temperature to 50 °C and dissolve the suspending agent, then the polymerization reaction solution was passed through a 1.68 mm-mesh sieve to remove aggregates, and the obtained bead-like polymer was washed, dehydrated and dried to obtain polymer fine particles (methacrylic resin 8).

The resultant methacrylic resin had an Mw of 95,000, a molecular weight distribution (Mw/Mn) of 1.95, and a presence amount (%) of the molecular weight components of one fifth or less of the value of Mp of 5.2%. In addition, the monomer unit had MMA/CMI of 96.1/3.9 mass% and the amount of unsaturated double bond end of 0.007 mol%.

((Production Example 10 (production of methacrylic resin 10))

A pressure-resistant polymerization reactor equipped with a stirrer was charged with 950 g of methyl methacrylate, 9.6 g of methyl acrylate, 0.18 g of Perhexa 22 as a polymerization initiator, 2.8 g of n-octyl mercaptan, and 240 g of meta-xylene. After the inside of the reaction vessel was replaced with a nitrogen atmosphere, the temperature was raised to 185 °C and the polymerization reaction was performed for 90 minutes. After collecting the contents and washing the reactor, the above operation was repeated 7 times. The collected contents were freeze-pulverized and then pelletized by a degassing extruder having a diameter $\varphi$ of 42 mm set at 230 °C to obtain a methacrylic resin 9.

The resultant resin had a weight average molecular weight of 76,000, a molecular weight distribution (Mw/Mn) of 1.97, and a presence amount of molecular weight components of one fifth or less of the peak top molecular weight (Mp) of 5.1%. The monomer unit had MMA/MA of 99/1 mass% and an amount of unsaturated double bond end of 0.014 mol%.

[Examples 1 to 26] [Comparative Examples 1 to 4]

A methacrylic resin, a light diffusing filler, an ultraviolet absorber, and other additives were each weighed so as to have the compounding ratio listed in Tables 1 and 2, and then the materials were charged into a tumbler and mixed. After the materials were sufficiently mixed, the mixed raw materials were charged into a twin screw extruder having a diameter $\varphi$ of 26 mm and melt-kneaded (compounded) to form strands. The strands were cooled in a water bath and then cut by a pelletizer to obtain pellets. During the compounding, a vacuum line was connected to a vent portion of the extruder to remove volatile components such as water and monomer components under the condition of -0.08 MPa. In this way, a methacrylic resin composition was obtained. The kneading temperature of the resin composition was 240 °C, except for 220 °C in Examples 9, 10, and 23 and 260 °C in Example 8. Note that the numerical values in Tables 1 and 2 represent the numbers of blended parts (parts by mass) when the mass of the methacrylic resin is taken to be 100 parts by mass.

<Flat plate-shaped sample>

(Injection molding)

Obtained pellets of the methacrylic resin composition were charged into an injection molding machine (EC-100SX manufactured by Shibaura Machine Co., Ltd.), and a flat plate-shaped sample A (100 mm × 100 mm × 3 mm, thickness t = 3 mm, length L =110 mm, and L/t = 37), and a flat plate-shaped sample B (100 mm × 100 mm × 2 mm, thickness t = 2 mm, length L =110 mm, and L/t = 55) were formed to obtain flat plate-shaped samples for evaluations. A mold whose surface (inner surface of the mold cavity) had been polished with a No. 8000 polisher was used as the mold.

The molding conditions for the flat plate-shaped sample for evaluation were set as follows.

Molding temperature (cylinder temperature): 250 °C
Injection rate: 20 mm/seconds
Holding pressure: 70 MPa
Mold temperature: 65 °C

Further, it is important to keep the mold temperature during injection molding higher so that the transferability of the mold surface polished with a No. 8000 polisher could be improved. A too high mold temperature requires too long cooling time, which is not desirable in practice. A mold temperature range in which good results could be obtained is 50 °C or higher and 100 °C or lower, more preferably 60 °C or higher and 90 °C or lower, and even more preferably 60 °C or higher and 85 °C or lower, among which 65 °C was selected in this case.

<ISO dumbbell test piece>

(Injection molding)

Obtained pellets of the methacrylic resin composition were charged into an injection molding machine (EC-100SX manufactured by Shibaura Machine Co., Ltd.), and an ISO No. 1 dumbbell test piece (thickness t = 4 mm, length L =175 mm, and L/t = 44) was molded, and a sample for Charpy impact test was cut out. The molding conditions were based on ISO K6717-2.

<Molding of plate-shaped molded article>

(Injection molding)

In addition, in Examples 8, 10 to 16, and 20, pellets of the methacrylic resin composition were charged into an injection molding machine (EC-100SX manufactured by Shibaura Machine Co., Ltd.), and injection molding was performed using a mold for a plate-shaped molded article (mold for two pieces of 220 mm $\times$ 10 mm $\times$ 3 mm) having a side gate at the part 10 - 19 mm from the upper side, under conditions of a molding temperature (cylinder temperature) of 230 °C, a mold temperature of 60 °C, a primary holding of 80 MPa (5 seconds), and an injection rate of 20 mm/seconds to obtain a plate-shaped molded article. In Examples 12 and 16, the methacrylic resin composition was filled into the final filling portion of the mold, and molded articles of 220 mm $\times$ 10 mm $\times$ thickness t of 3 mm, length L = 201 mm and L/t = 67 were obtained. In Example 8, there was a portion into which the resin was not filled, and molded articles of 189 mm $\times$ 10 mm $\times$ thickness t of 3 mm, length L = 178 mm, and L/t = 59 were obtained.

(Injection molding 2)

In Examples 1 to 26 having moldability with a practically satisfactory level, injection molded articles S of 350 mm $\times$ 100 mm $\times$ t = 2 mm, length L = 304 mm, and L/t = 152 were obtained by setting EC-100SX manufactured by Shibaura Machine Co., Ltd. to conditions of a cylinder temperature of 270 °C, a mold temperature of 70 °C, an injection rate of 140 mm/seconds, and a primary pressure holding of 90 MPa using an evaluation mold having a pin gate at the position of 50 mm from the left side and the upper side with which a molded article with dimensions of 350 mm $\times$ 100 mm $\times$ thickness = 2 mm can be formed. The diffusivities D and DH, DT, and DG of the injection molded articles S were measured. The results are summarized in Table 3. For each of the diffusivities DH, DT, and DG, when the difference from the diffusivity D was within 2%, it was evaluated as double circle (excellent); when the difference was within 3%, it was evaluated as O (good); when the difference was within 5%, it was evaluated as $\Delta$ (practically sufficient); and when the difference was more than 3%, it was evaluated as $\Delta\Delta$ (practically usable but there may be a problem in use depending on the size of a molded article). In Examples 1, 17, and 19, it was found that there was a problem in the stability of the diffusivity depending on the size of a molded article for applications in which the stability of the diffusivity is required even when the length L of the molded article is large as in the case of members for vehicles. In Example 8, DG was slightly inferior. In Example 20, DT and DG were slightly inferior. In addition, in the molded articles S obtained by injection molding in Examples 2 to 7, 9 to 16, 18, and 21 to 26, it was found that the molded articles S were injection molded articles that can be suitably used regardless of the length L of the molded articles even for applications in which the stability of the diffusivity is required as in the case of members for vehicles.

[Table 1]

| | | | Unit | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Ex. 8 |
|---|---|---|---|---|---|---|---|---|---|---|---|---|---|---|
| Methacrylic resin composition | Methacrylic resin | Methacrylic resin 1 | pt. by mass | 100 | 100 | 100 | 100 | 100 | 100 | 100 | 100 | 100 | 100 | - |
| | | Methacrylic resin 2 | pt. by mass | - | - | - | - | - | - | - | - | - | - | 100 |
| | | Methacrylic resin 3 | pt. by mass | - | - | - | - | - | - | - | - | - | - | - |
| | | Methacrylic resin 4 | pt. by mass | - | - | - | - | - | - | - | - | - | - | - |
| | | Methacrylic resin 5 | pt. by mass | - | - | - | - | - | - | - | - | - | - | - |
| | | Methacrylic resin 6 | pt. by mass | - | - | - | - | - | - | - | - | - | - | - |
| | | Methacrylic resin 7 | pt. by mass | - | - | - | - | - | - | - | - | - | - | - |
| | | Methacrylic resin 8 | pt. by mass | - | - | - | - | - | - | - | - | - | - | - |
| | | Methacrylic resin 9 | pt. by mass | - | - | - | - | - | - | - | - | - | - | - |
| | | Methacrylic resin 10 | pt. by mass | - | - | - | - | - | - | - | - | - | - | - |
| | | Crosslinked silicone resin | pt. by mass | - | - | - | - | - | - | - | - | - | - | - |
| | Light diffusing filler | Crosslinked styrene-MMA resin | pt. by mass | - | 1 | 3.2 | 5 | 1 | 2.8 | 5 | 0.2 | - | 1.8 | 3.3 |
| | | Barium sulfate | pt. by mass | 3 | - | - | - | - | - | - | - | - | - | - |
| | | Titanium dioxide | pt. by mass | - | - | - | - | - | - | - | - | 7 | - | - |
| | Ultraviolet absorber | Tinuvin P | pt. by mass | 0.02 | 0.02 | 0.03 | 0.03 | - | 0.02 | 0.04 | 0.03 | 0.02 | - | 0.03 |
| | | SEESORB 703 | pt. by mass | - | - | - | - | 0.05 | - | - | - | - | - | - |
| | | Tinuvin 770DF | pt. by mass | - | - | - | - | - | - | - | - | - | - | - |
| | Strength modifier | Kane-ace M-210 | pt. by mass | - | - | - | 15 | - | - | - | - | - | - | - |
| | Dye | MACROLEX Red EG | pt. by mass | - | - | 0.2 | - | - | - | - | - | - | - | - |
| | Lubricant | KALCOL 8098 | pt. by mass | 0.1 | 0.1 | 0.05 | 0.05 | 0.03 | 0.1 | 0.1 | 0.1 | 0.05 | 0.01 | 0.1 |
| | | ADKSTAB 2112 | pt. by mass | - | - | - | 0.05 | - | - | - | - | - | - | - |
| | Thermal stabilizer | Irganox 1010 | pt. by mass | - | - | - | 0.05 | - | - | - | - | - | - | - |
| | | ADKSTAB AO-80 | pt. by mass | - | - | - | - | - | - | - | - | - | - | - |
| | | Residual monomer ($\times 10^{3}$) | Mass ppm | 2 | 2 | 2 | 2 | 2 | 2 | 2 | 2 | 2 | 2 | 6 |
| Evaluation | | Total light transmittance | - | ○ | ○ | △△ | ◎ | ◎ | ◎ | ○ | × | × | ◎ | ◎ |
| | | Diffusivity | - | ◎ | ◎ | ◎ | ◎ | ◎ | ◎ | ◎ | ◎ | Not measurable | ◎ | ◎ |
| | | Long-term use property | - | △ | △ | ○ | △ | △ | △ | △ | △ | × | △ | ○ |
| | | Molding fluidity | - | △ | △ | △ | △ | △ | △ | △ | △ | △ | △ | △△ |
| | Heat deformation resistance | Intermediate point glass transition temperature | °C | 114 | 114 | 113 | 112 | 115 | 114 | 114 | 114 | 114 | 115 | 106 |
| | | Rating | - | ○ | ○ | ○ | ◎ | ○ | ◎ | ◎ | ○ | ○ | ○ | △ |
| | | Impact resistance | - | ◎ | ◎ | ○ | △ | ◎ | ◎ | ◎ | ◎ | × | ○ | ◎ |
| | | Viscosity at shear rate 100 ($\times 10^{2}$) | Pa·s | 8 | 8 | 8 | 9 | 8 | 8 | 8 | 7 | 7 | 8 | 11 |
| | | Bleed-out resistance property | - | ○ | ○ | - | △ | ○ | ○ | ○ | ○ | Not measurable | ○ | △ |
| | | Yellowishness | - | ○ | ○ | ○ | ○ | ○ | ○ | ○ | ○ | ○ | ○ | ○ |

[Table 2]

EP 4 198 085 A1

| | | | Unit | Ex. 9 | Ex. 10 | Ex. 11 | Ex. 12 | Ex. 13 | Ex. 14 | Ex. 15 | Ex. 16 | Ex. 17 | Ex. 18 | Ex. 19 | Comp. Ex. 4 | Ex. 20 | Ex. 21 | Ex. 22 | Ex. 23 | Ex. 24 | Ex. 25 | Ex. 26 |
|---|---|---|---|---|---|---|---|---|---|---|---|---|---|---|---|---|---|---|---|---|---|---|
| Methacrylic resin composition | Methacrylic resin | Methacrylic resin 1 | pt. by mass | - | - | - | - | - | - | - | - | - | - | - | - | - | - | - | - | 100 | 100 | 100 |
| | | Methacrylic resin 2 | pt. by mass | - | - | - | - | - | - | - | - | - | - | - | - | - | - | - | - | - | - | - |
| | | Methacrylic resin 3 | pt. by mass | 100 | - | - | - | - | - | - | - | - | - | - | - | - | - | - | - | - | - | - |
| | | Methacrylic resin 4 | pt. by mass | - | 100 | - | - | - | - | - | - | - | - | - | - | - | - | - | - | - | - | - |
| | | Methacrylic resin 5 | pt. by mass | - | - | 100 | 100 | 100 | 100 | 100 | 100 | 100 | 100 | - | - | - | - | - | - | - | - | - |
| | | Methacrylic resin 6 | pt. by mass | - | - | - | - | - | - | - | - | - | - | 100 | - | - | - | - | - | - | - | - |
| | | Methacrylic resin 7 | pt. by mass | - | - | - | - | - | - | - | - | - | - | - | 100 | - | - | - | - | - | - | - |
| | | Methacrylic resin 8 | pt. by mass | - | - | - | - | - | - | - | - | - | - | - | - | 100 | - | - | - | - | - | - |
| | | Methacrylic resin 9 | pt. by mass | - | - | - | - | - | - | - | - | - | - | - | - | - | 100 | 100 | - | - | - | - |
| | | Methacrylic resin 10 | pt. by mass | - | - | - | - | - | - | - | - | - | - | - | - | - | - | - | 100 | - | - | - |
| | Light diffusing filler | Crosslinked silicone resin | pt. by mass | 2.5 | 2.8 | 1 | 3.3 | 5 | - | - | - | - | - | 3.3 | 3.3 | 2.5 | 2 | - | - | - | - | - |
| | | Crosslinked styrene-MMA resin | pt. by mass | - | - | - | - | - | 1 | 2.8 | 5 | - | - | - | - | - | - | 2.5 | 3 | 5 | 0.75 | 0.75 |
| | | Barium sulfate | pt. by mass | - | - | - | - | - | - | - | - | 4 | - | - | - | - | - | - | - | - | - | - |
| | | Titanium dioxide | pt. by mass | - | - | - | - | - | - | - | - | - | 1 | - | - | - | - | - | - | - | - | - |
| | Ultraviolet absorber | Tinuvin P | pt. by mass | 0.06 | 0.04 | 0.02 | 0.02 | 0.02 | 0.03 | - | 0.05 | 0.03 | 0.03 | 0.02 | 0.03 | 0.02 | 0.03 | 0.03 | 0.04 | 0.01 | 0.1 | - |
| | | SEESORB 703 | pt. by mass | - | - | - | - | - | - | - | - | - | - | - | - | - | - | - | - | - | - | 0.1 |
| | | Tinuvin 770DF | pt. by mass | - | - | - | - | - | 0.05 | 0.04 | 0.05 | - | - | - | - | - | - | - | - | - | - | - |
| | Strength modifier | Kane-ace M-210 | pt. by mass | - | - | - | - | - | 12 | - | - | - | - | - | - | - | - | - | - | - | - | - |
| | Dye | MACROLEX Red EG | pt. by mass | - | - | - | - | - | - | - | - | - | - | - | - | - | - | - | - | - | - | - |
| | Lubricant | KALCOL 8098 | pt. by mass | - | 0.1 | 0.25 | - | 0.05 | 0.05 | 0.03 | - | - | - | 0.1 | 0.05 | - | 0.1 | 0.1 | - | 0.01 | 0.1 | 0.1 |
| | Thermal stabilizer | ADKSTAB 2112 | pt. by mass | - | - | - | - | - | 0.05 | 0.1 | - | - | - | - | - | - | 0.1 | 0.1 | 0.2 | - | - | - |
| | | Irganox 1010 | pt. by mass | - | - | - | 0.1 | - | 0.05 | - | - | - | - | - | - | 0.1 | - | - | - | - | - | - |
| | | ADKSTAB AO-80 | pt. by mass | - | - | - | - | 0.1 | - | - | - | - | - | - | - | - | 0.1 | 0.1 | - | - | - | - |
| Evaluation | | Residual monomer (×10^3) | Mass ppm | 2 | 3 | 3 | 3 | 3 | 3 | 3 | 3 | 4 | 4 | 5 | 3 | 4 | 3 | 3 | 1 | 2 | 2 | 2 |
| | | Total light transmittance | - | ○ | ○ | ◎ | ○ | ○ | ◎ | ◎ | ◎ | △ | △ | ○ | ○ | ○ | ○ | ◎ | ○ | ○ | ◎ | ◎ |
| | | Diffusivity | - | ◎ | ◎ | ◎ | ◎ | ◎ | ○ | ◎ | ◎ | ○ | ○ | ◎ | ◎ | ◎ | ◎ | ◎ | ◎ | ◎ | ◎ | ◎ |
| | | Long-term use property | - | ◎ | ◎ | ◎ | ◎ | ◎ | ◎ | ○ | ◎ | △ | △ | ○ | ◎ | ○ | ○ | ○ | ○ | ○ | ○ | ○ |
| | | molability | - | ○ | ○ | ○ | ○ | ○ | ○ | ○ | ○ | ○ | ○ | ○ | ○ | ○ | △ | △ | △ | △ | △ | △ |
| | | Molding fluidity | - | ◎ | ◎ | ◎ | ◎ | ◎ | ◎ | ◎ | ◎ | ◎ | ◎ | △ | ◎ | ◎ | ○ | ○ | ◎ | △ | △ | △ |
| | Heat deformation resistance | Intermediate point glass transition temperature | °C | 114 | 113 | 113 | 113 | 113 | 112 | 113 | 113 | 113 | 113 | 111 | 100 | 112 | 122 | 122 | 116 | 114 | 114 | 114 |
| | | Rating | - | ○ | ○ | ○ | ○ | ○ | ○ | ○ | ○ | ○ | ○ | ○ | × | ○ | ◎ | ◎ | ○ | ○ | ○ | ○ |
| | | Heat deformation resistance | - | ○ | ○ | ○ | ◎ | ◎ | ◎ | ◎ | ◎ | ○ | ○ | ○ | ◎ | ◎ | ◎ | ◎ | △ | ○ | ○ | ○ |
| | | Impact resistance | - | △ | ○ | ◎ | ◎ | ◎ | ◎ | ◎ | ◎ | ◎ | ◎ | ◎ | ○ | ◎ | ○ | ○ | ○ | ○ | ◎ | ◎ |
| | | Viscosity at shear rate 100 (×10^2) | Pa·s | 3 | 3 | 6 | 6 | 6 | 6 | 6 | 6 | 6 | 6 | 9 | 3 | 7 | 6 | 6 | 3 | 7 | 9 | 9 |
| | | Bleed-out resistance property | - | △ | △ | △ | ○ | △ | △ | △ | ○ | ○ | ○ | △ | × | △ | △ | △ | △ | ○ | △ | △ |
| | | Yellowishness | - | ○ | ○ | ○ | ○ | ○ | ○ | ○ | ○ | ○ | ○ | ○ | ○ | ○ | ○ | ○ | ○ | ○ | ○ | △ |

[Table 3]

| | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 | Ex. 16 | Ex. 17 | Ex. 18 | Ex. 19 | Ex. 20 | Ex. 21 | Ex. 22 | Ex. 23 | Ex. 24 |
|---|---|---|---|---|---|---|---|---|---|---|---|---|---|---|---|---|---|---|---|---|---|---|---|---|
| DH | ◎ | ◎ | ◎ | ◎ | ◎ | ◎ | ◎ | ◎ | ◎ | ◎ | ◎ | ◎ | ◎ | ◎ | ◎ | ◎ | ◎ | ◎ | ◎ | ◎ | ◎ | ◎ | ◎ | ◎ |
| DT | △ | ◎ | ◎ | ◎ | ◎ | ◎ | ◎ | ○ | ◎ | ◎ | ◎ | ◎ | ◎ | ◎ | ◎ | ◎ | △ | ◎ | ○ | △ | ◎ | ◎ | ◎ | ◎ |
| DG | △△ | ◎ | ◎ | ◎ | ◎ | ◎ | ◎ | △ | ◎ | ◎ | ○ | ○ | ○ | ○ | ○ | ○ | △△ | ○ | △△ | △ | ○ | ○ | ◎ | ◎ |

As described in Tables 1 to 3, in Examples 12 to 16, methacrylic resin compositions having not only excellent total light transmittance, diffusivity, long-term use property, and heat deformation resistance but also good formability, molding fluidity, thermal decomposition resistance, strength, and bleed-out resistance were produced. In Comparative Example 1, the addition amount of the light diffusing filler was small, and the light diffusion property was inferior. In Comparative Example 2, the amount of the light diffusing filler added was too large, and the total light transmittance was inferior, and the molded article did not appear bright even when light is incident. Further, the addition amount of the light diffusing filler was too large, and the weather resistance, the formability, and the thermal decomposition resistance were also inferior. In Comparative Example 3, because the ultraviolet absorber was not added, the long-term use property was inferior. The molded article produced according to Comparative Example 3 is not suitable for long-term use. Comparative Example 4 was inferior in heat deformation resistance. The molded article produced according to Comparative Example 4 would deform by heat of a light source and would not maintain a desired shape.

In Example 1, the weather resistance, the formability, and the moldability were slightly inferior to those of Examples 12 and 16 although they were at sufficient levels for practical use.

In Example 2, the formability and the moldability were slightly inferior to those of Examples 12 and 16 although they were at sufficient levels for practical use

In Example 3, the formability, the molding flowability, and the bleed-out resistance were slightly inferior to those of Examples 12 and 16 although they were at sufficient levels for practical use. In addition, the total light transmittance was low because of staining with the red dye although it was at a sufficient level for practical use. The staining in red was intentional, and although the total light transmittance is low, it can be used for a stop lamp member or the like for a vehicle in which diffusion of red light is desired.

In Example 4, the long-term use property, the formability, the molding flowability, and the bleed-out resistance were slightly inferior to those of Examples 12 and 16 although they were at sufficient levels for practical use.

In Examples 5 to 7, the formability and the molding fluidity were slightly inferior to those of Examples 12 and 16 although they were at sufficient levels for practical use.

In Example 8, the formability, the heat deformation resistance, and the bleed-out resistance were somewhat inferior and the molding fluidity is slightly inferior to those of Examples 12 and 16 although they were at sufficient levels for practical use.

In Example 9, the strength and the bleed-out resistance were slightly inferior to those of Examples 12 and 16 although they were at sufficient levels for practical use.

In Examples 10, 11, 13 to 15, the bleed-out resistance was slightly inferior to that of Examples 12 and 16 although it was at a practically sufficient level.

In Examples 17 and 18, the light transmittance and the weather resistance were slightly inferior to those of Examples 12 and 16 although they were at sufficient levels for practical use.

In Example 19, the molding flowability and the bleed-out resistance were slightly inferior to those of Examples 12 and 16 although they were at sufficient levels for practical use.

In Example 20, the out resistance was slightly inferior to that of Examples 12 and 16 although it was at a practically sufficient level.

In Examples 21 and 22, the moldability and the bleed-out resistance were slightly inferior to those of Examples 12 and 16 although they were at sufficient levels for practical use.

In Examples 23, the formability and the thermal decomposition resistance were slightly inferior to those of Examples 12 and 16 although they were at sufficient levels for practical use.

In Example 24, the formability and the moldability were slightly inferior to those of Examples 12 and 16 although they were at sufficient levels for practical use.

In Example 25, the formability, the molding flowability, and the bleed-out resistance were somewhat inferior although they were at sufficient levels for practical use.

In Example 26, when the white LED was seen through the molded article, the light appeared yellowish and the yellowness was slightly inferior. The formability, the molding flowability, and the bleed-out resistance were slightly inferior.

INDUSTRIAL APPLICABILITY

Because the methacrylic resin composition of the present embodiment is excellent in heat deformation resistance, long-term properties, permits light to be excellently transmitted, and is excellent in light diffusion property, it can be suitably used as members used for construction, members for vehicles, electric and electronic members, lighting members, and the like. Specifically, it has industrial applicability as an illumination cover, a signboard, an interior or exterior member for a vehicle, such as a member for a vehicle lamp, an emblem, a shift lever, a switch panel, and a light guide portion of a button. In particular, because it can maintain the shape thereof even when used in a close proximity to a high-output LED, can sufficiently reduce the internal source image, and is bright and excellent in visibility, it is particularly suitable and industrially applicable as a member for a vehicle lamp and a member for reducing the light source image disposed inside a rear combination lamp.

**Claims**

1. A methacrylic resin composition comprising 0.5 to 6 parts by mass of a light diffusing filler having an average particle diameter of 0.2 to 10 μm and 0.005 to 0.3 parts by mass of an ultraviolet absorber with respect to 100 parts by mass of a methacrylic resin, and having an intermediate point glass transition temperature of 105 °C or higher.

2. The methacrylic resin composition according to claim 1, wherein the light diffusing filler is an organic particle.

3. The methacrylic resin composition according to claim 1 or 2, wherein the light diffusing filler is a crosslinked styrene-MMA resin or a crosslinked silicone resin.

4. The methacrylic resin composition according to any one of claims 1 to 3, wherein the average particle diameter of the light diffusing filler is 1.2 to 9 μm.

5. The methacrylic resin composition according to any one of claims 1 to 4, wherein a weight average molecular weight of the methacrylic resin is 75,000 to 230,000.

6. The methacrylic resin composition according to any one of claims 1 to 5, wherein the methacrylic resin is a methacrylic resin containing 6 to 50% of a molecular weight component of one fifth or less of a peak molecular weight (Mp) on a GPC elution curve measured by gel permeation chromatography (GPC).

7. The methacrylic resin composition according to any one of claims 1 to 6, wherein an amount of unsaturated double bond end of the methacrylic resin is 0.013 mol% or less.

8. The method according to any one of claims 1 to 7, wherein the ultraviolet absorber is an ultraviolet absorber having a maximum absorption wavelength at a wavelength of 300 nm or more and 350 nm or less in a wavelength range from 300 nm to 830 nm.

9. The methacrylic resin composition according to any one of claims 1 to 8, wherein any of the following I) to iii) is satisfied:

   i) a viscosity at a shear rate of 100 (1/second) at 260 °C is 1000 Pa·s or more and 1500 Pa·s or less, and the intermediate point glass transition temperature is 111 °C or higher and 130 °C or lower,
   ii) the viscosity at a shear rate of 100 (1/second) at 260 °C is 500 Pa·s or more and less than 1000 Pa·s, and the intermediate point glass transition temperature is 113 °C or higher and 130 °C or lower,
   iii) the viscosity at a shear rate of 100 (1/second) at 260 °C is 200 Pa·s or more and less than 500 Pa·s, and the intermediate point glass transition temperature is 115 °C or higher and 130 °C or lower.

10. The methacrylic resin composition according to any one of claims 1 to 9, wherein the methacrylic resin comprises a monomer unit derived from a methacrylic acid ester and a monomer unit derived from a monomer that does not contain an aromatic ring copolymerizable with a methacrylic acid ester.

11. The resin composition according to any one of claims 1 to 10, further comprising

   an additive,
   wherein a synthesis mass ratio of the additive excluding a rubber component to 100 parts by mass of the methacrylic resin is 0.15 parts by mass or less.

12. The methacrylic resin composition according to any one of claims 1 to 11, wherein a residual monomer is in an amount of 8000 mass ppm or less.

13. The methacrylic resin composition according to any one of claims 1 to 12, wherein the methacrylic resin composition does not comprise a yellowish dye.

14. A molded article produced by molding the methacrylic resin composition according to any one of claims 1 to 13.

**15.** The molded article according to claim 14, wherein the molded article has a thickness t of 1 to 5 mm.

**16.** The molded article according to claim 14 or 15, wherein the molding is injection molding.

**17.** The molded article according to claim 14, wherein a length L and the thickness t satisfy the following conditions (1), (2), and (3):

$$1 \text{ mm} \leq t \leq 5 \text{ mm} \qquad \text{Condition (1)}$$

$$L \geq 130 \text{ mm} \qquad \text{Condition (2)}$$

$$L/t \geq 65 \qquad \text{Condition (3)}$$

**18.** The molded article according to any one of claims 14 to 17 used as a member for a vehicle.

**19.** The molded article according to any one of claims 14 to 17 used as a member for a vehicle lamp.

**20.** The molded article according to any one of claims 14 to 17 used as a lamp cover disposed inside a combination lamp for a vehicle.

## INTERNATIONAL SEARCH REPORT

| International application No. |
| --- |
| **PCT/JP2021/029568** |

**A. CLASSIFICATION OF SUBJECT MATTER**

*C08L 33/04*(2006.01)i; *B29C 45/00*(2006.01)i; *C08K 3/014*(2018.01)i; *C08L 25/14*(2006.01)i; *C08L 83/04*(2006.01)i; *G02B 5/02*(2006.01)i

FI: C08L33/04; C08K3/014; C08L25/14; C08L83/04; B29C45/00; G02B5/02 B

According to International Patent Classification (IPC) or to both national classification and IPC

**B. FIELDS SEARCHED**

Minimum documentation searched (classification system followed by classification symbols)

C08L33/04; B29C45/00; C08K3/014; C08L25/14; C08L83/04; G02B5/02

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2004-050607 A (SUMITOMO CHEMICAL INDUSTRY COMPANY LIMITED) 19 February 2004 (2004-02-19)<br>claims, paragraphs [0069], [0081], examples | 1-8, 10-15, 17-20 |
| X | JP 2009-180895 A (SUMITOMO CHEMICAL CO., LTD.) 13 August 2009 (2009-08-13)<br>claims, examples | 1-5, 7-9, 11-14 |
| A | JP 2018-178019 A (MITSUBISHI ENGINEERING-PLASTICS CORPORATION) 15 November 2018 (2018-11-15)<br>paragraph [0080] | 1-20 |
| A | JP 2013-003192 A (MITSUBISHI PLASTICS INC.) 07 January 2013 (2013-01-07)<br>paragraph [0094] | 1-20 |
| A | JP 2015-155514 A (TOYO STYRENE CO., LTD.) 27 August 2015 (2015-08-27)<br>paragraph [0028] | 1-20 |
| A | WO 2018/155501 A1 (SUMITOMO CHEMICAL CO., LTD.) 30 August 2018 (2018-08-30)<br>paragraph [0077] | 1-20 |

✓ Further documents are listed in the continuation of Box C.    ✓ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 October 2021** | **12 October 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| International application No. |
| --- |
| **PCT/JP2021/029568** |

**C.　DOCUMENTS CONSIDERED TO BE RELEVANT**

| Category* | Citation of document, with indication, where appropriate, of the relevant passages | Relevant to claim No. |
| --- | --- | --- |
| A | JP 2006-133567 A (DENKI KAGAKU KOGYO KABUSHIKI KAISHA) 25 May 2006 (2006-05-25)<br>　　　claims, examples | 1-20 |
| A | JP 2006-116957 A (SUMITOMO CHEMICAL CO., LTD.) 11 May 2006 (2006-05-11)<br>　　　claims, examples | 1-20 |
| A | JP 2007-250345 A (SUMITOMO CHEMICAL CO., LTD.) 27 September 2007 (2007-09-27)<br>　　　claims, examples | 1-20 |
| A | JP 2008-065142 A (DENKI KAGAKU KOGYO KABUSHIKI KAISHA) 21 March 2008 (2008-03-21)<br>　　　claims, examples | 1-20 |
| A | WO 2005/076058 A1 (KURARAY CO., LTD.) 18 August 2005 (2005-08-18)<br>　　　claims, examples | 1-20 |

Form PCT/ISA/210 (second sheet) (January 2015)

INTERNATIONAL SEARCH REPORT
Information on patent family members

| Patent document cited in search report | | | Publication date (day/month/year) | Patent family member(s) | | | Publication date (day/month/year) |
|---|---|---|---|---|---|---|---|
| JP | 2004-050607 | A | 19 February 2004 | (Family: none) | | | |
| JP | 2009-180895 | A | 13 August 2009 | US 2009/0190067 A1 claims, examples CN 101498799 A KR 10-2009-0083875 A | | | |
| JP | 2018-178019 | A | 15 November 2018 | (Family: none) | | | |
| JP | 2013-003192 | A | 07 January 2013 | (Family: none) | | | |
| JP | 2015-155514 | A | 27 August 2015 | (Family: none) | | | |
| WO | 2018/155501 | A1 | 30 August 2018 | US 2020/0002486 A1 page 8, right column EP 3587902 A1 CN 110300870 A | | | |
| JP | 2006-133567 | A | 25 May 2006 | (Family: none) | | | |
| JP | 2006-116957 | A | 11 May 2006 | US 2006/0051704 A1 claims, examples KR 10-2006-0050941 A CN 1743171 A | | | |
| JP | 2007-250345 | A | 27 September 2007 | (Family: none) | | | |
| JP | 2008-065142 | A | 21 March 2008 | (Family: none) | | | |
| WO | 2005/076058 | A1 | 18 August 2005 | US 2007/0103929 A1 claims, examples KR 10-2006-0121291 A | | | |

International application No.
**PCT/JP2021/029568**

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H3207743 A

- JP H1067829 A